(19) Europäisches Patentamt

European Patent Office

Office européen des brevets

(11) **EP 4 020 330 A1**

(12) **EUROPEAN PATENT APPLICATION**

(43) Date of publication:
**29.06.2022   Bulletin 2022/26**

(21) Application number: **21196492.9**

(22) Date of filing: **14.09.2021**

(51) International Patent Classification (IPC):
**G06N 3/08** (2006.01)        **G06N 3/04** (2006.01)
**G06F 17/18** (2006.01)

(52) Cooperative Patent Classification (CPC):
**G06F 17/18; G06N 3/082; G06N 3/084;**
G06N 3/0472; G06N 3/0481

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2020   US 202017132879**

(71) Applicant: **Intel Corporation
Santa Clara, CA 95054 (US)**

(72) Inventor: **Rhodes, Anthony
Portland, 97209 (US)**

(74) Representative: **Goddar, Heinz J. et al
Boehmert & Boehmert
Anwaltspartnerschaft mbB
Pettenkoferstrasse 22
80336 München (DE)**

(54) **METHODS, APPARATUS, AND ARTICLES OF MANUFACTURE TO IMPROVE AUTOMATED MACHINE LEARNING**

(57)     Methods, apparatus, systems, and articles of manufacture are disclosed to improve automated machine learning. An example apparatus includes a communication processor to obtain, from a training controller, a truncated learning curve for a candidate hyperparameter configuration; an explicit mean function (EMF) generator to fit parameters of an EMF to the truncated learning curve, the EMF tailored to extrapolating learning curves for machine learning models; and an extrapolation controller to extrapolate remaining datapoints of the truncated learning curve according to the EMF to generate an extrapolated learning curve for the candidate hyperparameter configuration.

FIG. 10

**Description**

FIELD OF THE DISCLOSURE

This disclosure relates generally to machine learning, and, more particularly, to methods, apparatus, and articles of manufacture to improve automated machine learning.

BACKGROUND

Machine learning models, such as neural networks, are useful tools that have demonstrated their value solving complex problems regarding pattern recognition, natural language processing, automatic speech recognition, etc. Neural networks operate, for example, using artificial neurons arranged into layers that process data from an input layer to an output layer, applying weighting values to the data during the processing of the data. Such weighting values are determined during a training process. The number of layers in a neural network corresponds to the network's depth with more layers corresponding to a deeper network.

BRIEF DESCRIPTION OF THE DRAWINGS

FIG. 1 is a block diagram of an example network diagram including an example learning curve extrapolation (LCE) controller and an example training controller.
FIG. 2 is a block diagram illustrating additional detail of the example LCE of FIG. 1.
FIG. 3 is a block diagram illustrating additional detail of the example training controller of FIG. 1.
FIG. 4 is a graphical illustration showing example complete learning curves for one or more candidate hyperparameter configurations and/or one or more candidate architectures.
FIG. 5 is a graphical illustration showing example extrapolated learning curves generated from real-word truncated model loss data in accordance with teachings of this disclosure.
FIG. 6 is a graphical illustration showing example extrapolated learning curves generated from noisy, synthetic, truncated model loss data in accordance with teachings of this disclosure.
FIG. 7 is a graphical illustration showing an example comparison between the accuracy of the LCE controller of FIGS. 1 and/or 2 compared to a baseline model for an example first training dataset.
FIG. 8 is a graphical illustration showing an example comparison between the accuracy of the LCE controller of FIGS. 1 and/or 2 compared to a baseline model for an example second training dataset.
FIG. 9 is a schematic illustration of an example topology of a deep neural network (DNN) and example operations to freeze weights of the DNN during training in accordance with teachings of this disclosure.
FIG. 10 is a flowchart representative of machine-readable instructions which may be executed to implement the LCE controller of FIGS. 1 and/or 2.
FIG. 11 is a flowchart representative of machine-readable instructions which may be executed to implement the training controller of FIGS. 1 and/or 3.
FIG. 12 is a block diagram of an example processing platform structured to execute the instructions of FIGS. 10 to implement the LCE controller of FIGS. 1 and/or 2 and/or the instructions of FIG. 11 to implement the training controller of FIGS. 1 and/or 3.
FIG. 13 is a block diagram of an example software distribution platform to distribute software (e.g., software corresponding to the example computer readable instructions of FIGS. 10 and/or 11) to client devices such as those owned and/or operated by consumers, retailers, and/or original equipment manufacturers (OEMs).

The figures are not to scale. Instead, the thickness of the layers or regions may be enlarged in the drawings. In general, the same reference numbers will be used throughout the drawing(s) and accompanying written description to refer to the same or like parts. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

DETAILED DESCRIPTION

Artificial intelligence (AI), including machine learning, deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters (HPs) are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.). Alternatively, unsupervised training (e.g., used in deep learning, a subset of machine learning, etc.) involves inferring patterns from inputs to select parameters for the ML/AI model (e.g., without the benefit of expected (e.g., labeled) outputs).

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

As described above, neural networks operate, for example, using artificial neurons arranged into layers that process data from an input layer to an output layer, applying weighting values to the data during the processing of the data. Typically, to develop a machine learning model, a human expert (e.g., an engineer) adjusts aspects of the model until the human expert achieves a desired (e.g., optimal) model. For example, the human expert may adjust the model topology (e.g., architecture) and/or hyperparameters of the model to give the best performance for that model on a given task. As used herein a model topology may alternatively be referred to as a neural architecture (NA).

Automated machine learning (ML) is a field of machine learning that seeks to automate the process of developing a desired (e.g., best, optimal, etc.) model in a data driven way. However, automating the ML model development process typically requires a large amount of computing resources. For example, automated ML development programs search through a space of available model topologies (e.g., architectures) and a space including combinations of available HPs to identify the best combination of model topology and/or HPs to achieve a given task.

Typically, automated ML frameworks require efficient hyperparameter optimization (HPO) and neural architecture search (NAS) processes to train DNNs. To execute HPO and NAS for DNNs, automated ML algorithms acquire sample datapoints in the HPO-NAS space that represent labels per an objective function. For example, the sample datapoints represent training loss (e.g., error). Generating these labelled datapoints is computationally intensive. For example, the computational overhead to generate the labelled datapoints is a function of two factors. The first factor is the size of the search space. The size of the search space is determined by the number of HPs, range of architecture topologies under consideration, and the granularity of search. The second factor is the time needed and/or computational cost to render the labels.

Some approaches have sought to reduce the computational overhead of generating labelled datapoints. For example, a first approach proposed using a Gaussian model. For example, the first approach trained two different probabilistic regression models, a random forest (RF) and a variational recurrent neural network (VRNN), to predict the posterior mean and variance for test data. While the first approach provides acceptable accuracy, the first approach requires an abundance of data for initialization. For example, the first approach requires 5000 datapoints. Additionally, each model of the first approach must be trained which requires further time and computational resources expenditure, particularly in the non-trivial case of training the VRNN

A second approach proposed training a Bayesian neural network in conjunction with the use parametric basis functions. Parametric basis functions require training a separate network on a relatively large dataset. A third approach utilized a Bayesian method incorporating a weighted probabilistic learning curve. However, the third approach relies on domain knowledge to specify parametric models. Additionally, the third approach relies on the computation of Markov chain Monte Carlo (MCMC) evaluations. Other than the three approaches described above, most automated ML frameworks employ relatively naive approaches to learning curve extrapolation or do not execute any extrapolation procedure to reduce the computational overhead of generating labelled datapoints.

Examples disclosed herein include a framework to significantly improve the efficiency of automated ML workflows. Examples disclosed herein include two complementary processes to effectively compress the time needed and/or computational cost to render labels for automated ML model evaluation. For example, examples disclosed herein include semi-parametric learning curve extrapolation and low-supervision, progressive weight freezing.

The disclosed extrapolation of learning curves enables HPO-NAS for automated ML workflows to employ early stopping for less than optimal (e.g., below a threshold) HP-NA configurations. In addition to early stopping, examples disclosed herein maintain accurate projections of optimal and near-optimal HP-NA configurations. HPO-NAS optimization is typically executed as a highly parallelized, high-dimensional search problem. As such the learning curve projections disclosed herein greatly reduce the computational resources (e.g., processor cycles, memory consumption, power consumption, etc.) expended during HPO-NAS optimization.

Additionally, the learning curve projections disclosed herein greatly reduce the computational resources expended to improve the approximation of optimal HP-NAs. In additional or alternative examples disclosed herein an example low-supervision (e.g., partial training) process with progressive weight freezing provides additional resource savings for automated ML searches. Example weight freezing disclosed herein is performed when determining whether a candidate hyperparameter configuration would be beneficial and/or optimal for a given application. In this manner, example weight freezing disclosed herein is used to select an optimal network topology than can be trained without freezing (e.g., for optimal inference accuracy).

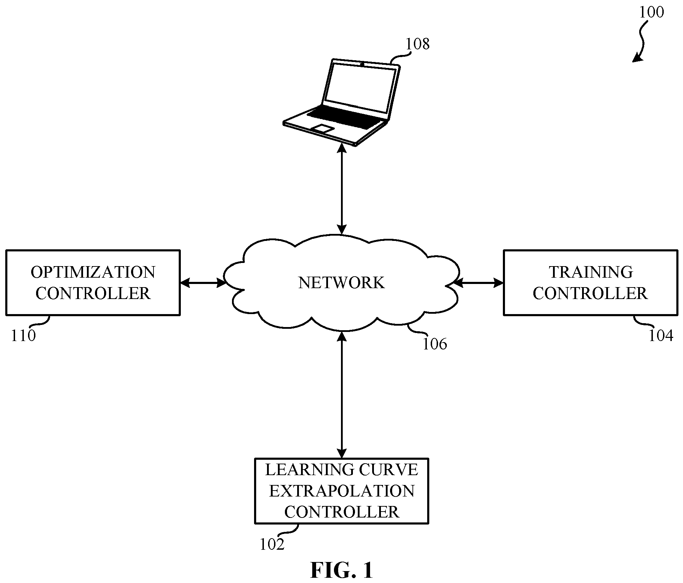

FIG. 1 is a block diagram of an example automated ML network 100 including an example learning curve extrapolation (LCE) controller 102 and an example training controller 104. The example automated ML network 100 includes the example LCE controller 102, the example training controller 104, an example network 106, an example end-user device 108, and an example optimization controller 110. In the example of FIG. 1, the example LCE controller 102, the example training controller 104, the example end-user device 108, the example optimization controller 110, and/or one or more additional devices are communicatively coupled via the example network 106.

In the illustrated example of FIG. 1, the LCE controller 102 is implemented by at least one processor executing instructions. In additional or alternative examples, the LCE controller 102 can be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). In the example of FIG. 1, the LCE controller 102 executes a semi-parametric Bayesian neural network (BNN) that implements Gaussian process regression (GPR) to extrapolate learning curves for one or more child models to be optimized (e.g., improved) by the automated ML network 100. In this manner the semi-parametric BNN effectively operates as a GPR model.

Many different types of machine learning models and/or machine learning architectures exist. In examples disclosed herein, a GPR model is used, as described above. Using a GPR model enables increased flexibility and improved curve fitting. Additionally, using a GPR model allows the LCE controller 102 to determine one or more confidence scores associated with respective extrapolated learning curves. In general, machine learning models/architectures that are suitable to use in the example approaches disclosed herein will be based on Bayesian networks. However, other types of machine learning models could additionally or alternatively be used. The LCE controller 102 executes the GPR model to extrapolate learning curves for the one or more child models according to a segmented explicit mean function (EMF). The segmented EMF broadly generalizes learning curve behavior, including pathological cases, such as overfitting. Additional detail of the LCE controller 102 is discussed further herein.

In the illustrated example of FIG. 1, the LCE controller 102 offers one or more services and/or products to end-users. For example, the LCE controller 102 provides one or more trained models for download, hosts a web-interface, among others. For example, if the LCE controller 102 hosts a web-interface, a user operating the end-user device 108 may request learning curve extrapolation. In some examples, the LCE controller 102 provides end-users with a plugin that implements the LCE controller 102. In this manner, the end-user can implement the LCE controller 102 locally (e.g., at the end-user device 108).

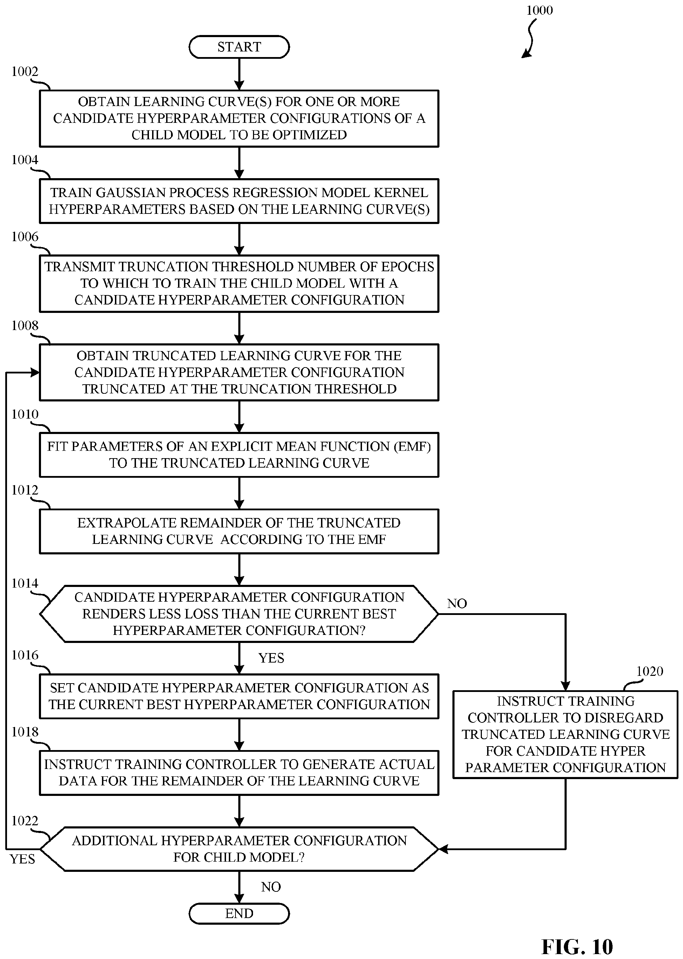

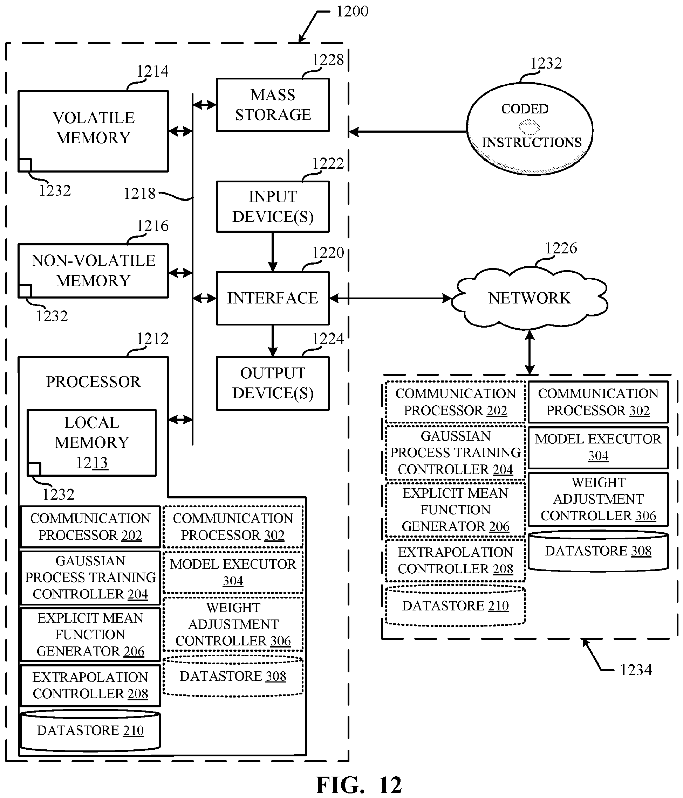

In some examples, the example LCE controller 102 implements example means for extrapolating learning curves. The means for extrapolating learning curves is implemented by executable instructions such as that implemented by at least blocks 1002, 1004, 1006, 1008, 1010, 1012, 1014, 1016, 1018, 1020, or 1022 of FIG. 10. The executable instructions of blocks 1002, 1004, 1006, 1008, 1010, 1012, 1014, 1016, 1018, 1020, or 1022 of FIG. 10 may be executed on at least one processor such as the example processor 1212 of FIG. 12. In other examples, the means for extrapolating learning curves is implemented by hardware logic, hardware implemented state machines, logic circuitry, and/or any other combination of hardware, software, and/or firmware.

In the illustrated example of FIG. 1, the training controller 104 is implemented by at least one processor executing instructions. In additional or alternative examples, the training controller 104 can be implemented by one or more analog or digital circuit(s), logic circuits, programmable processor(s), programmable controller(s), GPU(s), DSP(s), ASIC(s), PLD(s) and/or FPLD(s). In the example of FIG. 1, the training controller 104 progressively freezes weights of the one or more child models to be optimized (e.g., improved) by automated ML network 100. As such, the training controller 104 performs progressive weight freezing (PWF). Additional detail of the training controller 104 is discussed further herein.

In the illustrated example of FIG. 1, the training controller 104 offers one or more services and/or products to end-users. For example, the training controller 104 provides one or more executable files for download, hosts a web-interface, among others. For example, if the training controller 104 hosts a web-interface, a user operating the end-user device 108 may request PWF. In some examples, the training controller 104 provides end-users with a plugin that implements the training controller 104. In this manner, the end-user can implement the training controller 104 locally (e.g., at the end-user device 108).

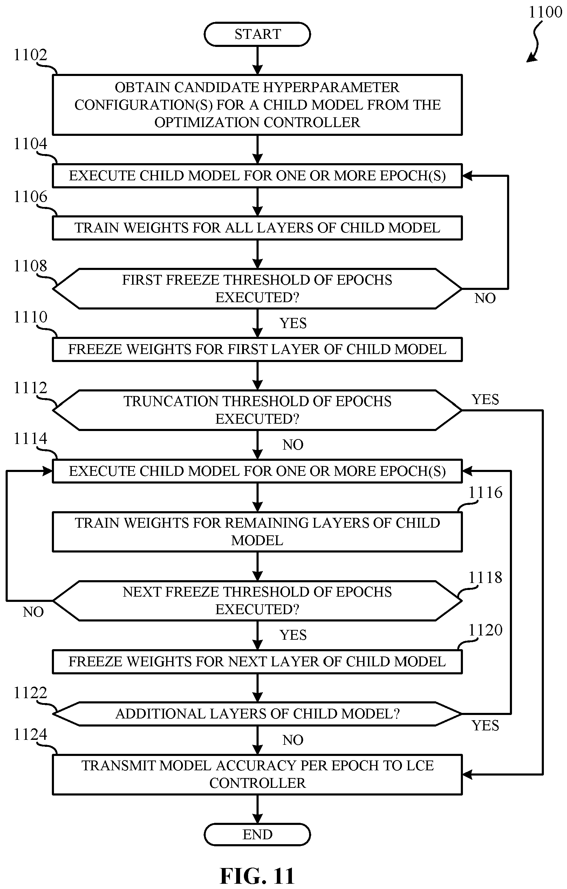

In some examples, the example training controller 104 implements example means for training machine learning models. The means for training machine learning models is implemented by executable instructions such as that implemented by at least blocks 1102, 1104, 1106, 1108, 1110, 1112, 1114, 1116, 1118, 1120, 1122, or 1124 of FIG. 11. The executable instructions of blocks 1102, 1104, 1106, 1108, 1110, 1112, 1114, 1116, 1118, 1120, 1122, or 1124 of FIG. 11 may be executed on at least one processor such as the example processor 1212 of FIG. 12. In other examples, the means for training machine learning models is implemented by hardware logic, hardware implemented state machines, logic circuitry, and/or any other combination of hardware, software, and/or firmware.

In the illustrated example of FIG. 1, the network 106 is the Internet. However, the example network 106 may be implemented using any suitable wired and/or wireless network(s) including, for example, one or more data buses, one or more Local Area Networks (LANs), one or more wireless LANs, one or more cellular networks, one or more private networks, one or more public networks, etc. In additional or alternative examples, the network 106 is an enterprise network (e.g., within businesses, corporations, etc.), a home network, among others. The example network 106 enables the LCE controller 102, the training controller 104, the end-user device 108, and/or the optimization controller 110 to communicate. As used herein, the phrase "in communication," including variances thereof (e.g., communicate, communicatively coupled, etc.), encompasses direct communication and/or indirect communication through one or more intermediary components and does not require direct physical (e.g., wired) communication and/or constant communication, but rather includes selective communication at periodic or aperiodic intervals, as well as one-time events.

In the illustrated example of FIG. 1, the end-user device 108 is implemented by a laptop computer. In additional or alternative examples, the end-user device 108 can be implemented by a mobile phone, a tablet computer, a desktop computer, a server, among others, including one or more analog or digital circuit(s), logic circuits, programmable processor(s), programmable controller(s), GPU(s), DSP(s), ASIC(s), PLD(s) and/or FPLD(s). The end-user device 108 can additionally or alternatively be implemented by a CPU, GPU, an accelerator, a heterogeneous system, among others.

In the illustrated example of FIG. 1, the end-user device 108 subscribes to and/or otherwise purchases a product and/or service from the LCE controller 102 and/or the training controller 104 to access one or more machine learning models trained to extrapolate learning curves for one or more child models and/or to perform PWF. For example, the end-user device 108 accesses the one or more trained models by downloading the one or more models from the LCE controller 102, downloading one or more executable files from the training controller 104, accessing a web-interface hosted by the LCE controller 102, the training controller 104, and/or another device, among other techniques. In some examples, the end-user device 108 installs one or more plugins to implement a machine learning application and/or other process. In such an example, the one or more plugins implement at least one of the LCE controller 102 or the training controller 104.

In the illustrated example of FIG. 1, the optimization controller 110 is implemented by at least one processor executing instructions. In additional or alternative examples, the optimization controller 110 can be implemented by one or more analog or digital circuit(s), logic circuits, programmable processor(s), programmable controller(s), GPU(s), DSP(s), ASIC(s), PLD(s) and/or FPLD(s). In the example of FIG. 1, the optimization controller 110 implements a Bayesian optimization model that executes a search algorithm to search the space of available model topologies and the space of available HPs configurations to identify the best combination of model topology and/or HPs to achieve a given task. Based on the training performed at the training controller 104, the optimization controller 110 determines a hyperparameter configuration and associated confidence measure as to the effectiveness of the child model with the hyperparameter configuration.

In the illustrated example of FIG. 1, the optimization controller 110 may host an interface (e.g., an application programming interface (API), a user interface (UI), a web-interface, etc.) to obtain input values from the end-user device 108. For example, the optimization controller 110 obtain one or more training datasets with which to train child models, one or more model templates (e.g., baseline models) corresponding to respective ones of the one or more child models to be optimized (e.g., improved), and one or more hyperparameters. For example, the hyperparameters include batch size (e.g., input data size), learning rate (LR), a number of layers of respective child models, a number of nodes in each layer of respective child models, hardware optimization parameters (e.g., for a target hardware platform at which to deploy the trained child model), dropout, momentum, decay, loss parameters, model architecture parameters, among others.

In example operation, for a child model to be optimized (e.g., improved) by the automated ML network 100, the optimization controller 110 selects a candidate hyperparameter configuration to evaluate. The LCE controller 102 determines a truncation threshold number of passes (e.g., epochs) of a training dataset that the child model is to execute. The LCE controller 102 transmits the truncation threshold to the training controller 104. Subsequently, the training controller 104 executes the child model with the candidate hyperparameter configuration up to the threshold number of epochs. In this manner, the training controller 104 generates a truncated learning curve for the candidate hyperparameter configuration.

In example operation, the training controller 104 transmits the truncated learning curve to the LCE controller 102 which extrapolates the remaining portion of the learning curve according to the EMF. Based on the extrapolated learning curve, the optimization controller 110 reduces the search space and continues to search for optimal model parameters within the reduced search space. By accurately extrapolating truncated learning curves, the LCE controller 102 reduces the amount of time and/or the amount of computational resources (e.g., processor cycles, memory consumption, power consumption, etc.) expended to train the child model. Upon selecting a new candidate hyperparameter configuration, the optimization controller 110 transmits the new candidate hyperparameter configuration to the training controller 104. Subsequently, the training controller 104 trains the child model with the new candidate hyperparameter configuration up to the threshold number of epochs. In some examples, the threshold number of epochs is a learned value.

In the example of FIG. 1, while the LCE controller 102 and the training controller 104 are illustrated as separate devices, external to one another, in some examples the LCE controller 102 and the training controller 104 may be implemented by the same device. For example, the LCE controller 102 and the training controller 104 may be implemented by a processor executing instructions that implement the LCE controller 102 and the training controller 104. In some examples, the LCE controller 102, the training controller 104, and the optimization controller 110 may be implemented by the same device. Alternatively, in some examples, one or more of the LCE controller 102, the training controller 104, or the optimization controller 110 may be geographically diverse from other ones of the LCE controller 102, the training controller 104, and the optimization controller 110.

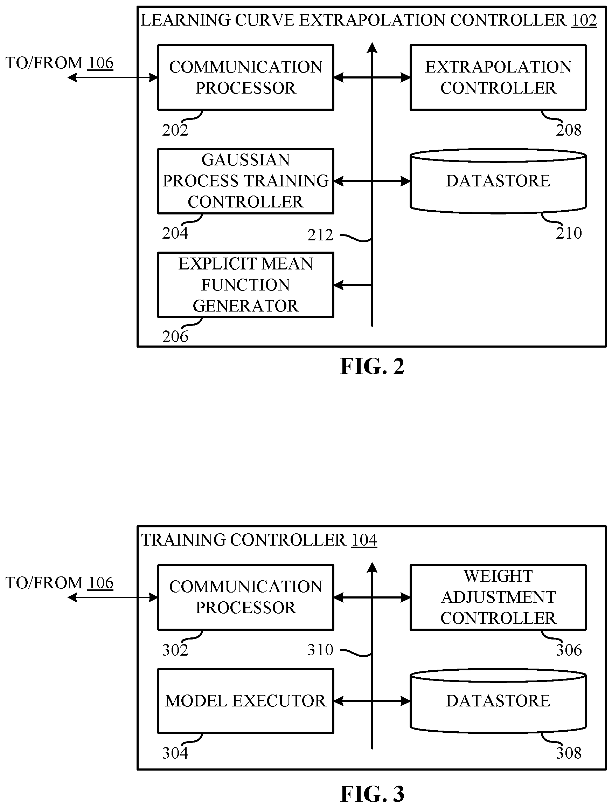

FIG. 2 is a block diagram illustrating additional detail of the example LCE controller 102 of FIG. 1. In the example of FIG. 2, the LCE controller 102 includes an example communication processor 202, an example Gaussian process training controller 204, an example explicit mean function (EMF) generator 206, an example extrapolation controller 208, and an example datastore 210. In the example of FIG. 2, any of the communication processor 202, the Gaussian process training controller 204, the EMF generator 206, the extrapolation controller 208, and/or the datastore 210 can communicate via an example communication bus 212.

In examples disclosed herein, the communication bus 212 may be implemented using any suitable wired and/or wireless communication. In additional or alternative examples, the communication bus 212 includes software, machine readable instructions, and/or communication protocols by which information is communicated among the communication processor 202, the Gaussian process training controller 204, the EMF generator 206, the extrapolation controller 208, and/or the datastore 210.

In the illustrated example of FIG. 2, the communication processor 202 is implemented by at least one processor executing instructions. In additional or alternative examples, the communication processor 202 can be implemented by one or more analog or digital circuit(s), logic circuits, programmable processor(s), programmable controller(s), GPU(s), DSP(s), ASIC(s), PLD(s) and/or FPLD(s). For example, the communication processor 202 may be implemented by a network interface controller. The example communication processor 202 functions as a network interface structured to communicate with other devices in the network 106 with a designated physical and data link layer standard (e.g., Ethernet or Wi-Fi).

In the illustrated example of FIG. 2, the communication processor 202 obtains one or more initial learning curves for one or more candidate hyperparameter configurations of a child model. For example, the initial learning curves may be complete learning curves (e.g., non-truncated and non-extrapolated) and/or truncated learning curves. The initial learning curves are to be used to train the GPR model executed by the LCE controller 102. After the GPR model is trained, the communication processor 202 transmits a truncation threshold to the training controller 104 specifying a number of epochs to which to train the child model.

In the illustrated example of FIG. 2, based on the truncation threshold, the training controller 104 generates a truncated learning curve for the child model. In some examples, the training controller 104 generates the truncated learning curve using progressive weight freezing (e.g., the truncated learning curve is generated using progressive weight freezing). The communication processor 202 obtains the truncated learning curve for the child model. Additionally or alternatively, the communication processor 202 determines if there are additional candidate hyperparameter configurations for which to generate extrapolated learning curves. For example, the next candidate hyperparameter for which the LCE controller 102 is to extrapolate a learning curve.

In some examples, the communication processor 202 implements example means for processing communications. The means for processing communications is implemented by executable instructions such as that implemented by at least blocks 1002, 1006, 1008, and 1022 of FIG.10. The executable instructions of blocks 1002, 1006, 1008, and 1022 of FIG. 10 may be executed on at least one processor such as the example processor 1212 of FIG. 12. In other examples, the means for processing communications is implemented by hardware logic, hardware implemented state machines, logic circuitry, and/or any other combination of hardware, software, and/or firmware.

In the illustrated example of FIG. 2, the Gaussian process training controller 204 is implemented by at least one processor executing instructions. In additional or alternative examples, the Gaussian process training controller 204 can be implemented by one or more analog or digital circuit(s), logic circuits, programmable processor(s), programmable controller(s), GPU(s), DSP(s), ASIC(s), PLD(s) and/or FPLD(s). The Gaussian process training controller 204 trains the GPR model executed by the LCE controller 102 based on the initial one or more learning curves (e.g., complete or truncated).

In examples disclosed herein, ML/AI models are trained using the conjugate gradient method. For example, the Gaussian process training controller 204 determines a maximum likelihood estimate (MLE). However, any other training algorithm may additionally or alternatively be used. In examples disclosed herein, training is performed until the GPR model predicts learning curves within a threshold of error as compared to the initial one or more learning curves. In examples disclosed herein, training is performed at the LCE controller 102. However, as discussed above, in some examples, the end-user device 108 may download a plugin and/or other software to facilitate training at the end-user device 108. Training is performed using hyperparameters that control how the learning is performed (e.g., a learning rate, a number of layers to be used in the machine learning model, etc.). In examples disclosed herein, hyperparameters that control the kernel function of the GPR model. Such hyperparameters are selected by, for example, the Gaussian process training controller 204. In some examples re-training may be performed. Such re-training may be performed in response to the GPR model falling below the threshold of error.

Training is performed using training data. In examples disclosed herein, the training data originates from initial one or more learning curves. Because supervised training is used, the training data is labeled. Labeling is applied to the training data by the training controller 104. Once training is complete, the model is deployed for use as an executable construct that processes an input and provides an output based on the network of nodes and connections defined in the model. The model is stored at the datastore 210. The model may then be executed by the EMF generator 206 and/or the extrapolation controller 208. The GPR model may be executed on any type of hardware (e.g., commercial end-user laptop, datacenter capable server, smartphone, etc.) In some examples, the GPR model is executed by a processor in the automated ML network 100. In such an example, the GPR model is executed on a server.

In some examples, the Gaussian process training controller 204 implements example means for training Gaussian process models. The means for training Gaussian process models is implemented by executable instructions such as that implemented by at least block 1004 of FIG. 10. The executable instructions of block 1004 of FIG. 10 may be executed on at least one processor such as the example processor 1212 of FIG. 12. In other examples, the means for training Gaussian process models is implemented by hardware logic, hardware implemented state machines, logic circuitry, and/or any other combination of hardware, software, and/or firmware.

In the illustrated example of FIG. 2, the EMF generator 206 is implemented by at least one processor executing instructions. In additional or alternative examples, the EMF generator 206 can be implemented by one or more analog or digital circuit(s), logic circuits, programmable processor(s), programmable controller(s), GPU(s), DSP(s), ASIC(s), PLD(s) and/or FPLD(s). The EMF generator 206 adjusts parameters of an example segmented EMF disclosed herein to fit the segmented EMF to the truncated learning curve obtained from the training controller 104. Additional detail of example EMFs disclosed herein is discussed below. For example, in operation, the EMF generator 206 is fitting parameters of the segmented EMF to the truncated learning curve.

In some examples, the EMF generator 206 implements example means for fitting EMFs. The means for fitting EMFs is implemented by executable instructions such as that implemented by at least block 1010 of FIG. 10. The executable instructions of block 1010 of FIG. 10 may be executed on at least one processor such as the example processor 1212 of FIG. 12. In other examples, the means for fitting EMFs is implemented by hardware logic, hardware implemented state machines, logic circuitry, and/or any other combination of hardware, software, and/or firmware.

In the illustrated example of FIG. 2, the extrapolation controller 208 is implemented by at least one processor executing instructions. In additional or alternative examples, the extrapolation controller 208 can be implemented by one or more analog or digital circuit(s), logic circuits, programmable processor(s), programmable controller(s), GPU(s), DSP(s), ASIC(s), PLD(s) and/or FPLD(s). The extrapolation controller 208 extrapolates the remainder of the truncated learning curve according an EMF disclosed herein.

Additionally, the extrapolation controller 208 maintains a record of the current best hyperparameter configuration (e.g., between the various iterations of the search performed by the optimization controller 110). Accordingly, the extrapolation controller 208 determines whether the loss of the extrapolated learning curve for the current candidate hyperparameter configuration is less than the loss of the current best hyperparameter configuration. If the extrapolation controller 208 determines that the current hyperparameter configuration does not decrease the loss of the child model below that of the current best hyperparameter configuration, the extrapolation controller 208 instructs the training controller 104 to disregard the truncated learning curve for the current hyperparameter configuration. Alternatively, if the extrapolation controller 208 determines that the current hyperparameter configuration decreases the loss of the child model below that of the current best hyperparameter configuration, the extrapolation controller 208 sets the candidate hyperparameter configuration as the current best hyperparameter configuration and instructs the training controller 104 to determine the remainder of the learning curve for the current hyperparameter configuration.

In some examples, the extrapolation controller 208 implements example means for extrapolating. The means for extrapolating is implemented by executable instructions such as that implemented by at least blocks 1012, 1014, 1016, 1018, or 1020 of FIG.10. The executable instructions of blocks 1012, 1014, 1016, 1018, or 1020 of FIG. 10 may be executed on at least one processor such as the example processor 1212 of FIG. 12. In other examples, the means for extrapolating is implemented by hardware logic, hardware implemented state machines, logic circuitry, and/or any other combination of hardware, software, and/or firmware.

In the illustrated example of FIG. 2, the datastore 210 is configured to store data. For example, the datastore 210 can store one or more files indicative of one or more trained GPR models, one or more learning curves (e.g., truncated and/or complete), one or more candidate hyperparameter configurations of a child model, the current bests hyperparameter configuration, and/or one or more extrapolated learning curves. In the example of FIG. 2, the datastore 210 may be implemented by a volatile memory (e.g., a Synchronous Dynamic Random-Access Memory (SDRAM), Dynamic Random-Access Memory (DRAM), RAMBUS Dynamic Random-Access Memory (RDRAM), etc.) and/or a non-volatile memory (e.g., flash memory). The example datastore 210 may additionally or alternatively be implemented by one or more double data rate (DDR) memories, such as DDR, DDR2, DDR3, DDR4, mobile DDR (mDDR), etc.

In additional or alternative examples, the example datastore 210 may be implemented by one or more mass storage devices such as hard disk drive(s), compact disk drive(s), digital versatile disk drive(s), solid-state disk drive(s), etc. While in the illustrated example the datastore 210 is illustrated as a single database, the datastore 210 may be implemented by any number and/or type(s) of databases. Furthermore, the data stored in the datastore 210 may be in any data format such as, for example, binary data, comma delimited data, tab delimited data, structured query language (SQL) structures, etc.

Example pseudocode representative of instructions executed by the LCE controller 102 to extrapolate learning curves is shown below in Pseudocode 1.

Pseudocode 1

| Pseudocode 1 | Semi-Parametric Bayesian Learning Curve Extrapolation |
|---|---|
| 1. | Obtain initial learning curves: $\{C_i\}_{i=1:n}$ |
| 2. | Train GPR kernel parameters: arg min$\theta$ - log$_p(\boldsymbol{y}\vert\theta)$ |
| 3. | **for** hyperparameter configuration $\Lambda_t$ in $\{\Lambda_1, ..., \Lambda_T\}$ **do** |
| 4. | Obtain truncated learning curve $\{x_j(\Lambda_t),y_j(\Lambda_t)\}_{j=1:m}$ |
| 5. | Fit segmented EMF: |

$$m(x, \boldsymbol{\alpha}, \boldsymbol{b}) = \alpha_1 e^{-\alpha_2 x} + \alpha_3 e^{-\alpha_2(x-b_1)} + \alpha_4 e^{-\alpha_5(x-b_2)} + \alpha_5$$

| 6. | Compute extrapolated learning curve: |

$$p(\mathbf{f}_*\vert\mathbf{X}, \mathbf{Y}, \mathbf{X}_*), \text{ where } p(\mathbf{f}\vert\mathbf{X}) = N(m(x, \boldsymbol{\alpha}, \boldsymbol{b}), \mathbf{K})$$

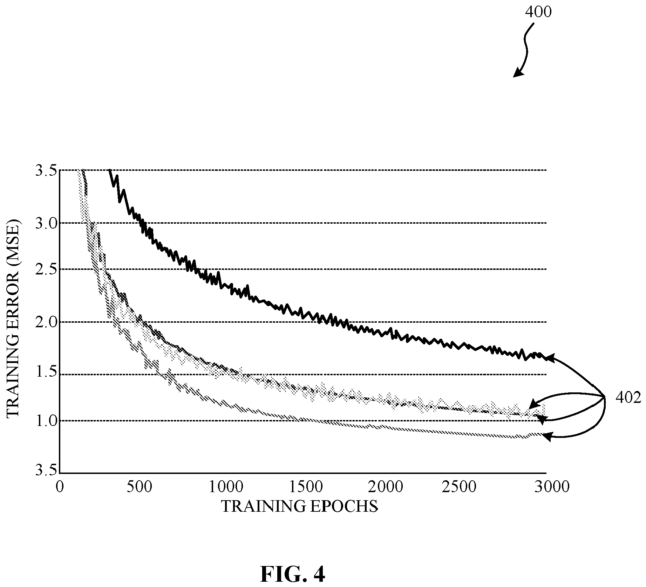

At line 1 of Pseudocode 1, the LCE controller 102 obtains one or more initial learning curves represented as a matrices $\{C_i\}_{i=1:n}$. For example, the communication processor 202 requests the one or more initial learning curves $\{C_i\}_{i=1:n}$ from the training controller 104. In response to such a request, the training controller 104 generates the one or more initial learning curves. In the example of FIG. 2, the training controller 104 executes several (can be a small number) candidate HP configurations in full (e.g., for an upper limit of epochs). In some examples, the training controller 104 executes several candidate HP configurations to the truncation threshold. In some examples, the training controller 104 executes a small number of candidate HP configurations as opposed to several. Example one or more training curves are illustrated and described in connection with FIG. 4.

At line 2 of Pseudocode 1, the LCE controller 102 trains the kernel parameters of the GPR model (e.g., a noise enabled GPR model). For example, the Gaussian process training controller 204 trains the noise enabled GPR model by tuning the HPs for the kernel function of the GPR model, for example, via the conjugate gradient method. For example, the Gaussian process training controller 204 determines a MLE for the GPR kernel HPs according to equations 1, 2, 3, and 4 below:

$$\arg \min \boldsymbol{\theta} - \log_p(\boldsymbol{y}|\boldsymbol{\theta}) = \frac{1}{2}\log(|\mathbf{C}(\boldsymbol{\theta})|) + \frac{1}{2}\mathbf{y}^T\mathbf{C}(\boldsymbol{\theta})^{-1}\mathbf{y} + \frac{N}{2}\log(2\pi)$$

Equation 1

$$\mathbf{C}(\boldsymbol{\theta}) = \mathbf{K}(\boldsymbol{\theta}) + \sigma_n^2\mathbf{I}$$

Equation 2

$$\mathbf{K}(x, x') = \sigma_0^2 e^{-\frac{1}{2}\left(\frac{x-x'}{\lambda}\right)^2}$$

Equation 3

$$\boldsymbol{\theta} = \langle \sigma_0, \sigma_n, \lambda \rangle$$

Equation 4

In the example equations 1, 2, 3, and 4, the bolded variables represent matrices (e.g., one dimensional (vectors) and/or multi-dimensional matrices). For example, the variable $\theta$ represents a vector of the hyperparameters of the GPR model. By tuning the hyperparameters of the GPR model via the MLE, the Gaussian process training controller 204 calibrates the scale of the learning curves generated by the GPR model.

For each candidate hyperparameter configuration At, the LCE controller 102 obtains a truncated learning curve for the candidate hyperparameter configuration from the training controller 104 (line 4). For example, the communication processor 202 requests the truncated learning curve from the training controller 104. In response to such a request, the training controller 104 generates the truncated learning curve for the candidate hyperparameter configuration. For example, the training controller 104 executes 20 epochs (e.g., the truncation threshold) instead of 100 (e.g., a complete learning curve). In examples disclosed herein, the truncated learning curve is represented by a two-dimensional matrix. For example, the training controller 104 generates the matrix represented in equation 5 below:

$$\left\{x_j(\boldsymbol{\Lambda}_t), y_j(\boldsymbol{\Lambda}_t)\right\}_{j=1:m}$$

Equation 5

In example equation 5, the variable m defines the EMF according to which the extrapolation controller 208 extrapolates the remainder (e.g., remaining datapoints) of the truncated learning curve (e.g., the remaining 80 epochs). Accordingly, the example extrapolation controller 208 disclosed herein predicts time series data (e.g., future datapoints). The example EMFs disclosed herein encode general prior information about learning curves (learned from the one or more initial learning curves) into the extrapolated learning curves. The EMF, m, is illustrated in equation 6 below:

$$m(x, \boldsymbol{\alpha}, \boldsymbol{b}) = \alpha_1 e^{-\alpha_2 x} + \alpha_3 e^{-\alpha_2 (x-b_1)} + \alpha_4 e^{-\alpha_5 (x-b_2)} + \alpha_5$$

$$\text{Equation 6}$$

GPR models are defined by at least two characteristics, a mean function, and a covariance function. Most GPR models either set the mean function to zero or utilize a general mean function that is not tailored to the application to which the GPR model is to be applied. Contrary to most GPR models, the example EMF disclosed in equation 6 is specifically tailored to the application of extrapolating learning curves for machine learning models. For example, the EMF of equation 6 is designed to track the expected shape and/or form of learning curves for machine learning models with tunable parameters. In this manner, the EMF generator 206 tunes the parameters of the EMF function of equation 6 to fit the truncated learning curve for the child model.

In the illustrated example of equation 6, the vector $\alpha$, including entries $\alpha_1$, $\alpha_2$, $\alpha_3$, $\alpha_4$, and $\alpha_5$, control how the EMF of equation 6 is fit to the truncated learning curve. In the example of equation 6, the vector b, including entries $b_1$ and $b_2$ represent break points in the EMF. In some examples, individual b values are included in the EMF. In this manner, the EMF disclosed in equation 6 represents the expected shape and/or form of learning curves for machine learning models as a piecewise approximation that better fits the shape of learning curves for machine learning models. In this manner, the EMF disclosed in equation 6 provides flexibility for the EMF generator 206 to fit a truncated learning curve that may have multiple functions.

Alternative EMFs are represented in equations 7, 8, and 9 below:

$$m(x, \boldsymbol{\alpha}) = \alpha_1 e^{-\alpha_2 x} + \alpha_3$$

$$\text{Equation 7}$$

$$m(x, \boldsymbol{\alpha}, b) = \alpha_1 e^{-\alpha_2 x} + \alpha_3 (x - b_1)^2 + \alpha_4$$

$$\text{Equation 8}$$

$$m(x, \boldsymbol{\alpha}, b) = \alpha_1 e^{-\alpha_2 x} + \alpha_3 (x - b_1) + \alpha_4$$

$$\text{Equation 9}$$

The relative mean squared error (MSE) and standard deviation (STD) of the relative MSE for the EMFs of equations 6, 7, 8, and 9 are illustrated in tables 1, 2, 3, and 4, respectively. In the example tables 1, 2, 3, and 4, LCE fidelity corresponds to the percentage of a learning curve that is predicated and/or otherwise extrapolated.

Table 1

| LCE Fidelity | Relative MSE | STD (Relative MSE) |
|---|---|---|
| 80% | 0.0338 | 0.1223 |
| 60% | 0.0079 | 0.0389 |
| 40% | 0.0020 | 0.0142 |
| 20% | 0.0005 | 0.0040 |

Table 2

| LCE Fidelity | Relative MSE | STD (Relative MSE) |
|---|---|---|
| 80% | 0.7221 | 7.4812 |

(continued)

| LCE Fidelity | Relative MSE | STD (Relative MSE) |
|---|---|---|
| 60% | 0.0281 | 0.2522 |
| 40% | 0.0061 | 0.0518 |
| 20% | 0.0019 | 0.0168 |

Table 3

| LCE Fidelity | Relative MSE | STD (Relative MSE) |
|---|---|---|
| 80% | 2.5424 | 12.2361 |
| 60% | 0.01467 | 1.1652 |
| 40% | 0.0132 | 0.09317 |
| 20% | 0.0022 | 0.0170 |

Table 4

| LCE Fidelity | Relative MSE | STD (Relative MSE) |
|---|---|---|
| 80% | 0.0342 | 0.01236 |
| 60% | 0.0080 | 0.03882 |
| 40% | 0.0020 | 0.01425 |
| 20% | 0.0005 | 0.0041 |

The example EMFs disclosed herein dynamically accommodate for learning curves exhibiting both expected decay behavior as well as pathological decay (e.g., overfitting). In some examples disclosed herein, pathological can be used interchangeably with problematic. At line 5 of Pseudocode 1, the LCE controller 102 fits the segmented EMF to the truncated learning curve. For example, the EMF generator 206 fits the segmented EMF to the truncated learning curve. In the example Pseudocode 1, the EMF generator 206 fits the EMF to the truncated learning curve via non-linear least-squares regression.

At line 6 of Pseudocode 1, the LCE controller 102 computes the extrapolated learning curve. For example, the extrapolation controller 208 extrapolates the remainder of the truncated learning curve for the candidate hyperparameter configuration (e.g., At) yielding an approximate, full, or complete, learning curve for the candidate hyperparameter configuration. In the example of Pseudocode 1, the extrapolation controller 208 extrapolates the remainder of the truncated learning curve according to equations 10 and 11 below:

$$p(\mathbf{f}_* | \mathbf{X}, \mathbf{Y}, \mathbf{X}_*)$$

Equation 10

$$p(\mathbf{f} | \mathbf{X}) = N(m(x, \boldsymbol{\alpha}, \boldsymbol{b}), \mathbf{K})$$

Equation 11

When executed by the extrapolation controller 208, equation 10 causes the extrapolation controller 208 to determine the values of x-y coordinates of points in the learning curve that are adjacent to the truncated learning curve. In the example of equation 10, the matrix **f*** corresponds to example y-values of the x-y coordinates of unknown datapoints in the learning curve to be extrapolated. In the example of equation 10, the matrices **X** and **Y** correspond to the x-y coordinates of known datapoints in the truncated learning curve. In the example of equation 10, the matrix **X*** corresponds to example x-values of the x-y coordinates of the unknown datapoints in the learning curve to be extrapolated.

According to equation 11, equation 10 is a function of the example EMF disclosed herein (e.g., equations 6, 7, 8, and/or 9) and a matrix **K.** The matrix **K** represents the covariance function of the example GPR model disclosed herein. Accordingly, based on equations 10 and 11, the GPR model, when executed by the LCE controller 102, renders a confidence score (e.g., posterior variance) for the extrapolated learning curve (e.g., the one or more x-y coordinates of the unknown datapoints). If the extrapolated result offers a better approximate loss (e.g., less loss) than the previous incumbent best candidate hyperparameter configuration, the LCE controller 102 instructs the training controller 104 to continue evaluating the learning curve for the candidate hyperparameter configuration (e.g., $\Lambda_t$). Otherwise, the LCE controller 102 instructs the training controller 104 to disregard and/or otherwise reject the truncated learning curve for the candidate hyperparameter configuration.

FIG. 3 is a block diagram illustrating additional detail of the example training controller 104 of FIG. 1. In the example of FIG. 3, the training controller 104 includes an example communication processor 302, an example model executor 304, an example weight adjustment controller 306, and an example datastore 308. In the example of FIG. 3, any of the communication processor 302, the model executor 304, the weight adjustment controller 306, and/or the datastore 308 can communicate via an example communication bus 310.

In examples disclosed herein, the communication bus 310 may be implemented using any suitable wired and/or wireless communication. In additional or alternative examples, the communication bus 310 includes software, machine readable instructions, and/or communication protocols by which information is communicated among the communication processor 302, the model executor 304, the weight adjustment controller 306, and/or the datastore 308

In the illustrated example of FIG. 3, the communication processor 302 is implemented by at least one processor executing instructions. In additional or alternative examples, the communication processor 302 can be implemented by one or more analog or digital circuit(s), logic circuits, programmable processor(s), programmable controller(s), GPU(s), DSP(s), ASIC(s), PLD(s) and/or FPLD(s). For example, the communication processor 302 may be implemented by a network interface controller. The example communication processor 302 functions as a network interface structured to communicate with other devices in the network 106 with a designated physical and data link layer standard (e.g., Ethernet or Wi-Fi).

In the illustrated example of FIG. 3, the communication processor 302 obtains one or more candidate hyperparameter configurations of a child model. For example, the communication processor 302 obtains the one or more candidate hyperparameter configurations from the optimization controller 110. After the training controller 104 has generated a learning curve (e.g., truncated and/or complete), the communication processor 302 transmits a matrix representative of the truncated learning curve (e.g., $\{C_i\}_{i=1:n}$ and/or $x_j(\Lambda_t)$, $y_j(\Lambda_t)\}_{j=1:m}$) to the LCE controller 102.

In some examples, the communication processor 302 implements example means for processing communications. The means for processing communications is implemented by executable instructions such as that implemented by at least blocks 1102 and 1124 of FIG.11. The executable instructions of blocks 1102 and 1124 of FIG.11 may be executed on at least one processor such as the example processor 1212 of FIG. 12. In other examples, the means for processing communications is implemented by hardware logic, hardware implemented state machines, logic circuitry, and/or any other combination of hardware, software, and/or firmware.

In the illustrated example of FIG. 3, the model executor 304 is implemented by one or more computing devices. For example, the model executor 304 can be implemented by one or more analog or digital circuit(s), logic circuits, programmable processor(s), programmable controller(s), GPU(s), DSP(s), ASIC(s), PLD(s) and/or FPLD(s). In some examples, the model executor 304 can additionally or alternatively be implemented by one or more vision processing units (VPUs) and/or one or more AI accelerators. The model executor 304 executes the child models in accordance with patterns and/or associations based on a training dataset and the candidate hyperparameter configuration. In the example of FIG. 3, the model executor 304 executes child models for a threshold number of epochs (e.g., a truncation threshold, a freeze threshold, etc.).

In some examples, the model executor 304 implements example means for executing a machine learning model. The means for executing a machine learning model is implemented by executable instructions such as that implemented by at least blocks 1104, 1108, 1112, 1114, 1118, and 1122 of FIG. 11. The executable instructions of blocks 1104, 1108, 1112, 1114, 1118, and 1122 of FIG. 11 may be executed on at least one processor such as the example processor 1212 of FIG. 12. In other examples, the means for executing a machine learning model is implemented by hardware logic, hardware implemented state machines, logic circuitry, and/or any other combination of hardware, software, and/or firmware.

In the illustrated example of FIG. 3, the weight adjustment controller 306 is implemented by at least one processor executing instructions. In additional or alternative examples, the weight adjustment controller 306 can be implemented by one or more analog or digital circuit(s), logic circuits, programmable processor(s), programmable controller(s), GPU(s), DSP(s), ASIC(s), PLD(s) and/or FPLD(s). The weight adjustment controller 306 adjusts weights of the child model in order to optimize (e.g., minimize, reduce, etc.) the loss of the child model.

In the illustrated example of FIG. 3, the weight adjustment controller 306 performs progressive weight freezing. Accordingly, the weight adjustment controller 306 reduces the computational resource overhead requirements of model evaluation for HPO-NAS by applying training to a subset of the model weights. In this manner, the weight adjustment controller 306 performs low-supervision HPO-NAS. By training on only a subset of the child model weights, the weight adjustment controller 306 reduces the substantial overhead presented by backpropagation evaluations (e.g., the bulk of HPO-NAS computational cost) while concurrently rendering an accurate model evaluation.

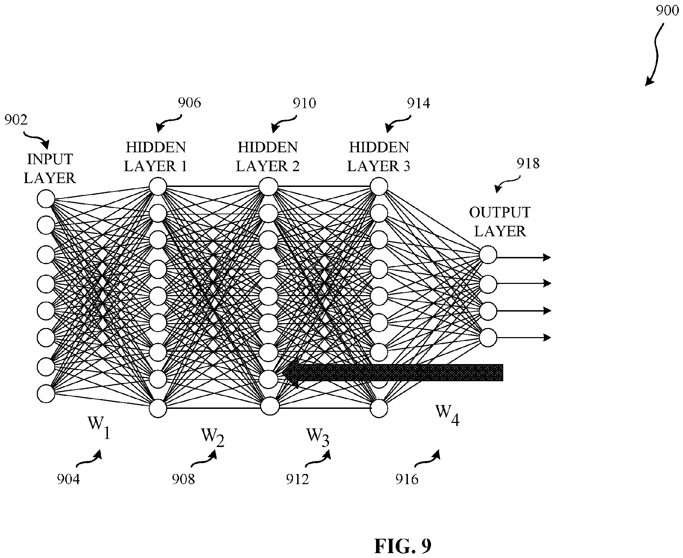

To perform low-supervision weight freezing, the weight adjustment controller 306 trains a child model with a candidate HP-NA configuration for a fixed subset of the network weights. For example, low-supervision weight freezing achieves effective training results while reducing computational complexity because the weights contained in the layers closer to the output layer (e.g., the deeper layers) of the network require the fewest computational resources in general. In this manner, the weight adjustment controller 306 freezes a subset of the layers of the network (e.g., the shallower layers) and trains exclusively on the remaining layers. Additional detail of progressive weight freezing is illustrated and described in connection with FIG. 9.

In some examples, the weight adjustment controller 306 implements example means for adjusting weights. The means for adjusting weights is implemented by executable instructions such as that implemented by at least blocks 1106, 1110, 1116, and 1120 of FIG.11. The executable instructions of blocks 1106, 1110, 1116, and 1120 of FIG.11 may be executed on at least one processor such as the example processor 1212 of FIG. 12. In other examples, the means for adjusting weights is implemented by hardware logic, hardware implemented state machines, logic circuitry, and/or any other combination of hardware, software, and/or firmware.

In the illustrated example of FIG. 3, the datastore 308 is configured to store data. For example, the datastore 308 can store one or more files indicative of one or more child models, one or more learning curves (e.g., truncated and/or complete), one or more candidate hyperparameter configurations of a child model, and/or one or more weights associated with the one or more child models. In the example of FIG. 3, the datastore 308 may be implemented by a volatile memory (e.g., a SDRAM, DRAM, RDRAM, etc.) and/or a non-volatile memory (e.g., flash memory). The example datastore 308 may additionally or alternatively be implemented by one or more DDR memories, such as DDR, DDR2, DDR3, DDR4, mDDR, etc.

In additional or alternative examples, the example datastore 308 may be implemented by one or more mass storage devices such as hard disk drive(s), compact disk drive(s), digital versatile disk drive(s), solid-state disk drive(s), etc. While in the illustrated example the datastore 308 is illustrated as a single database, the datastore 308 may be implemented by any number and/or type(s) of databases. Furthermore, the data stored in the datastore 308 may be in any data format such as, for example, binary data, comma delimited data, tab delimited data, SQL structures, etc.

FIG. 4 is a graphical illustration 400 showing example complete learning curves 402 for one or more candidate hyperparameter configurations and/or one or more candidate architectures. In the example of FIG. 4, the complete learning curves 402 include multiple datapoints that are represented by a x-y coordinate pair. In the example of FIG. 4, the y-values are measured in training error, such as MSE, and the x-values are measured in training epochs. As such, the complete learning curves 402 illustrates how the training error changes across training epochs (e.g., time) for respective hyperparameter configurations.

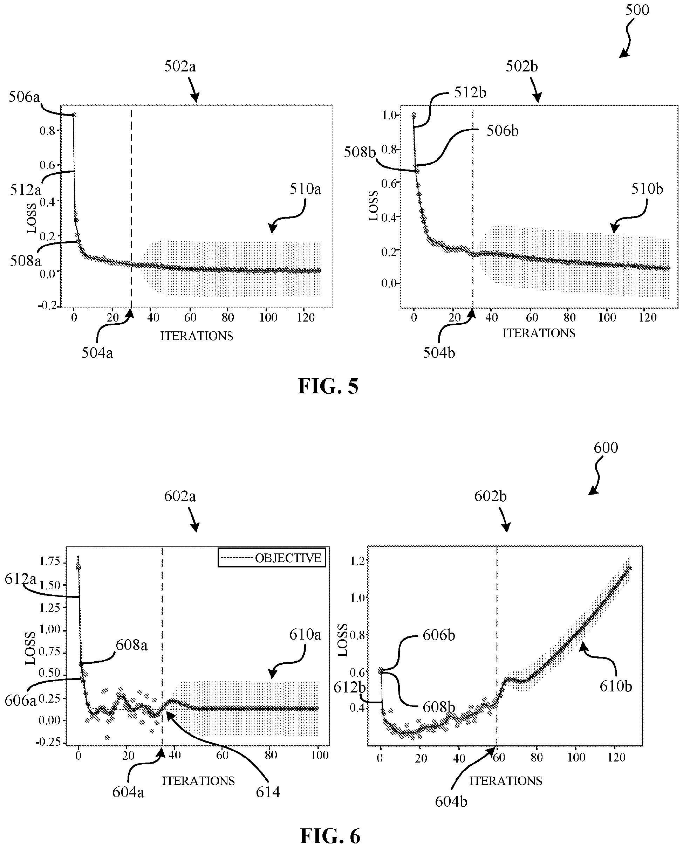

FIG. 5 is a graphical illustration 500 showing example extrapolated learning curves 502a, 502b generated from real-word truncated model loss data in accordance with teachings of this disclosure. The example LCE controller 102 disclosed herein successfully projects learning curves from a truncation threshold of 30 epochs (e.g., 504a, 504b) to completed learning curve of 128 epochs on real data, yielding only approximately 1% error. As such, the example LCE controller 102 disclosed herein performs learning curve extrapolation at or above the accuracy of currently existing learning curve extrapolation techniques at the time of this writing.

In the illustrated example of FIG. 5, the extrapolated learning curves 502a, 502b correspond to truncated learning curves generated from real DNN HP training data. For example, the datapoints 506a, 506b represent observed data from truncated run while the datapoints 508a, 508b represent datapoints predicted by the LCE controller 102 disclosed herein. The error bars 510a, 510b denote 95% confidence regions. In each extrapolated learning curve 502a, 502b, the prediction error at epoch 128 was approximately 1%. The lines 512a, 512b are a graphical illustration of the fitted EMFs disclosed herein.

FIG. 6 is a graphical illustration 600 showing example extrapolated learning curves 602a, 602b generated from noisy, synthetic, truncated model loss data in accordance with teachings of this disclosure. In the example of FIG. 6, the extrapolated learning curves 602a, 602b correspond to truncated learning curves generated from noisy, synthetic, data. For example, the datapoints 606a, 602b represent observed data from truncated run while the datapoints 608a, 608b represent datapoints predicted by the LCE controller 102 disclosed herein. The error bars 610a, 610b denote 95% confidence regions. The lines 612a, 612b are a graphical illustration of the fitted EMFs disclosed herein.

In the illustrated example of FIG. 6, the first extrapolated learning curve 602a is compared to a target objective function 614 specifying a desired loss to which the training controller 104 is to train the child model. In the first extrapolated learning curve, prediction error at the final epoch is less than .1% (e.g., less than one-tenth of a percent). The LCE controller 102 successfully accommodates pathological learning curve prediction (e.g., the second extrapolated learning curve 602b), including child models with hyperparameter configurations that cause the model to be overfit.

Table 5 illustrates results of the LCE controller 102 compared to available automated ML pruner software used for HPO on the MNIST training dataset.

Table 5

| | Median Accuracy | Standard Deviation Accuracy | Median Number of Epochs |
|---|---|---|---|
| LCE Controller 102 | 94.54 (best = 95.31) | 1.395 | 1597 |
| Available Pruner Software | 94.08 (best = 94.95) | 0.575 | 1457 |

In the illustrated example of table 5, the LCE controller 102 outperforms available pruner software when averages across ten HPO trials. For example, table 5 illustrates the results of the ten HPO trials comparing the LCE controller 102 and the available pruner software.

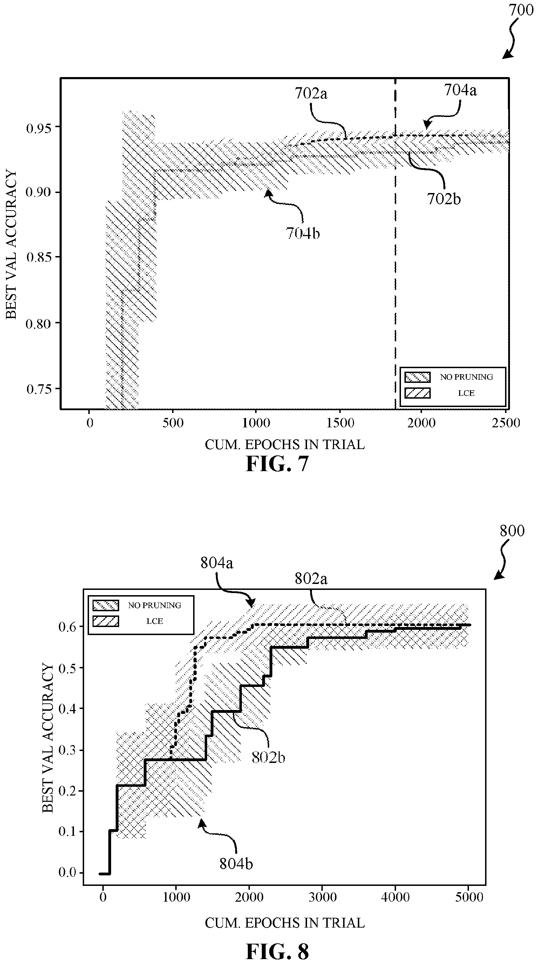

FIG. 7 is a graphical illustration 700 showing an example comparison between the accuracy 702a of the LCE controller 102 of FIGS. 1 and/or 2 compared to the accuracy 702b of a baseline model without pruning for an example first training dataset. For example, the comparison of FIG. 7 is a comparison across ten trials on the MNIST dataset for HPO. The vertical axis of the graphical illustration 700 corresponds to model accuracy and the horizontal axis of the graphical illustration 700 corresponds to cumulative epochs. The accuracies 702a, 702b correspond to the mean accuracy and the regions 704a, 704b correspond to respective standard deviations. In the example of FIG. 7, the standard deviation regions 704a, 704b correspond to +/- 1 standard deviation.

FIG. 8 is a graphical illustration 800 showing an example comparison between the accuracy 802a of the LCE controller 102 of FIGS. 1 and/or 2 compared to the accuracy 802b of a baseline model without pruning for an example second training dataset. For example, the comparison of FIG. 8 is a comparison across ten trials on the CIFAR-10 dataset for HPO. The vertical axis of the graphical illustration 800 corresponds to model accuracy and the horizontal axis of the graphical illustration 800 corresponds to cumulative epochs. The accuracies 802a, 802b correspond to the mean accuracy and the regions 804a, 804b correspond to respective standard deviations. In the example of FIG. 8, the standard deviation regions 804a, 804b correspond to +/- 1 standard deviation.

FIG. 9 is a schematic illustration of an example topology of a DNN 900 and example operations to freeze weights of the DNN during training in accordance with teachings of this disclosure. In the example of FIG. 9, the DNN 900 includes an example input layer 902, example hidden layers 906, 910, and 910, and an example output layer 918. The example input layer 902 includes multiple example input neurons, the example hidden layers 906, 910, and 914 include multiple example hidden neurons, and the example output layer 918 includes multiple example output neurons.

In the illustrated example of FIG. 9, the input neurons of the input layer 902 are coupled to the neurons of the first hidden layer 906 and weights 904 ($W_1$) are applied to the output of the input neurons. Similarly, weights 908 ($W_2$) are applied to the outputs of the hidden neurons of the first hidden layer 906. Additionally, weights 912 ($W_3$) are applied to the outputs of the hidden neurons of the second hidden layer 910 and weights 916 ($W_4$) are applied to the outputs of the hidden neurons of the third hidden layer 914.

As used herein, a deep model refers to a machine learning model that includes a relatively greater number of layers (e.g., hundreds, thousands, etc.). Additionally, when used in the context of machine learning model layers, the term "deep" or variants thereof refers to layers that are later in the model (e.g., the third layer of an ML model is deeper than the second layer of the ML model). As used herein, a shallow model refers to a machine learning model that includes a relatively fewer number of layers (e.g., a relatively small number of layers, shallow, etc.). Additionally, when used in the context of machine learning model layers, the term "shallow" or variants thereof refers to layers that an earlier in the model (e.g., the second layer of an ML model is shallower than the third layer of the ML model).

In the illustrated example of FIG. 9, the weight adjustment controller 306 freezes the weights (e.g., 904 ($W_1$) and 908 ($W_2$)) associated with the input layer 902 and the first hidden layer 906. Accordingly, when the weight adjustment controller 306 backpropagates calculations across the layers of the DNN 900 to train the DNN 900, the calculation only propagates across the weights (e.g., 912 ($W_3$) and 916 ($W_4$)) associated with second hidden layer 910 and the third hidden layer 914. In this manner, the weight adjustment controller 306 performs static weight freezing.

Alternatively, and preferably, the weight adjustment controller 306 progressively freezes the weights (e.g., 904, 908, 9012, 916) beginning with shallower layers. Accordingly, the progressive weight freezing executed by the weight adjustment controller 306 improves efficiency in train machine learning models. PWF disclosed herein yields significant efficiency gains over static weight freezing. PWF disclosed herein takes advantage of the fact that NNs learn hierarchical feature representations of input data by allocating the majority of training resources for training the deeper layers of the NN. By updating the weights for deeper layers of NNs, the weight adjustment controller 306 reduces the computational resource expenditure incurred to backpropagate calculations. For example, updates to the weights of the deepest layer are the least computationally expensive to determine for backpropagation.

Table 6 illustrates results for statis weight freezing and PWF for three hidden layers of a DNN trained using the MNIST training dataset.

Table 6

| Model Weight Fidelity | Top 5/Bottom 5 (intersection) | Top 10/Bottom 10 | Top 20/Bottom 20 | RBO | Average BP Compute Savings |
|---|---|---|---|---|---|
| $W_4$ (trainable) | 20%/40% | 40%/60% | 100%/80% | 0.7623 | ~4x |
| $W_4$, $W_3$ | 20%/20% | 70%/70% | 90%/20% | 0.7741 | ~2x |
| $W_4$, $W_3$, $W_2$ | 20%/80% | 30%/80% | 65%/60% | 0.8314 | ~1.25x |
| Progressive (25-25-25-25) | 20%/100% | 60%/80% | 90%/85% | 0.9078 | ~2.1x |
| Progressive (5-5-5-85) | 40%/80% | 70%/90% | 85%/85% | 0.9157 | ~3.6x |

In the example of table 6, each row represents a different weight freezing strategy. For each weight freezing strategy, 50 randomly generated NN architectures from a three hidden layer template (as illustrated in FIG. 9) with a common learning rate (e.g., 0.01). The number of neurons in each layer for a given architecture was randomly chosen in the range of one to one hundred. The activation function for each network was randomly chosen from the set RELU, tanh, and sigmoid.

In the illustrated example of table 6, the top "N"/Bottom "N" intersection (e.g., for N=5, 10, and 20) denotes the intersection of the top "N" and Bottom "N" model topologies where weights that are frozen by the weight adjustment controller 306 as compared to a baseline model where weights for all layers are trained across the 50 topologies ranked from best to worst (with respect to final validation accuracy). The PWF technique "25-25-25-25" indicates that for the first 25 epochs of training (out of a total 100), the weight adjustment controller 306 does not freeze any weights, in other words, all the weights of the model are trained and/or otherwise adjusted. In the PWF technique "25-25-25-25," for the next 25 epochs, the weight adjustment controller 306 freezes the weights for the first layer and for the following 25 epochs the weight adjustment controller 306 freezes the weights of the first and second layers and so on. Similarly, the "5-5-5-85" PWF technique indicates that for the first 5 epochs, the weight adjustment controller 306 allows weights for all layers to be trainable; for the next 5 epochs, the weight adjustment controller 306 freezes the weights of the first layer; for the following 5 epochs the weight adjustment controller 306 freeze the weights of the first and second layers, and so on.

The top "N"/Bottom "N" metric illustrates a qualitative match of the progressively weight frozen models with the baseline, fully trainable model. However, the top "N"/Bottom "N" metric is sensitive to (e.g., may vary greatly for) subtle differences between the ranked model lists. As such, table 6 also illustrates a comparison between the ranked lists (e.g., of the 50 trained models, ranked by validation accuracy) between the baseline, fully trainable model, and each of the progressively weight frozen models, using a rank-biased overlap (RBO), The RBO, when evaluated for two ranked lists yields a value from zero to one (e.g., [0,1]), where one indicates an exact match.

In the example of table 6, the "5-5-5-85" PWF technique yielded nearly four times improvement in average backpropagation (BP) compute savings for training. Additionally, the "5-5-5-85" PWF technique generated the highest fidelity improvement. The efficiency improvement multiplier for PWF is generally dependent on the depth of the network topology under analysis. In some examples, PWF efficiency could exceed 4X for larger networks, such as ResNet.

While an example manner of implementing the LCE controller 102 of FIG. 1 is illustrated in FIG. 2, one or more of the elements, processes and/or devices illustrated in FIG. 2 may be combined, divided, re-arranged, omitted, eliminated and/or implemented in any other way. Additionally, while an example manner of implementing the training controller 104 of FIG. 1 is illustrated in FIG. 3, one or more of the elements, processes and/or devices illustrated in FIG. 3 may be combined, divided, re-arranged, omitted, eliminated and/or implemented in any other way. Further, the example communication processor 202, the example Gaussian process training controller 204, the example explicit mean function (EMF) generator 206, the example extrapolation controller 208, the example datastore 210, and/or, more generally, the example LCE controller 102 of FIG. 2, and/or the example communication processor 302, the example model executor 304, the example weight adjustment controller 306, the example datastore 308, and/or more generally, the example training controller 104 of FIG. 3 may be implemented by hardware, software, firmware and/or any combination of hardware, software and/or firmware. Thus, for example, any of the example communication processor 202, the example Gaussian process training controller 204, the example explicit mean function (EMF) generator 206, the example extrapolation controller 208, the example datastore 210, and/or, more generally, the example LCE controller 102 of FIG. 2, and/or the example communication processor 302, the example model executor 304, the example weight adjustment controller 306, the example datastore 308, and/or more generally, the example training controller 104 of FIG. 3 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example communication processor 202, the example Gaussian process training controller 204, the example explicit mean function (EMF) generator 206, the example extrapolation controller 208, the example datastore 210, and/or, more generally, the example LCE controller 102 of FIG. 2, and/or the example communication processor 302, the example model executor 304, the example weight adjustment controller 306, the example datastore 308, and/or more generally, the example training controller 104 of FIG. 3 is/are hereby expressly defined to include a non-transitory computer readable storage device or storage disk such as a memory, a digital versatile disk (DVD), a compact disk (CD), a Blu-ray disk, etc. including the software and/or firmware. Further still, the example LCE controller 102 of FIGS. 1 and/or 2 and/or the example training controller 104 of FIGS. 1 and/or 3 may include one or more elements, processes and/or devices in addition to, or instead of, those illustrated in FIGS. 2 and/or 3, and/or may include more than one of any or all of the illustrated elements, processes, and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

A flowchart representative of example hardware logic, machine readable instructions, hardware implemented state machines, and/or any combination thereof for implementing the LCE controller 102 of FIGS. 1 and/or 2 is shown in FIG. 10. A flowchart representative of example hardware logic, machine readable instructions, hardware implemented state machines, and/or any combination thereof for implementing the training controller 104 of FIGS. 1 and/or 3 is shown in FIG. 11. The machine-readable instructions may be one or more executable programs or portion(s) of an executable program for execution by a computer processor and/or processor circuitry, such as the processor 1212 shown in the example processor platform 1200 discussed below in connection with FIG. 12. The program may be embodied in software stored on a non-transitory computer readable storage medium (e.g., non-transitory computer-readable medium) such as a CD-ROM, a floppy disk, a hard drive, a DVD, a Blu-ray disk, or a memory associated with the processor 1212, but the entire program and/or parts thereof could alternatively be executed by a device other than the processor 1212 and/or embodied in firmware or dedicated hardware. Further, although the example program is described with reference to the flowcharts illustrated in FIGS. 10 and/or 11, many other methods of implementing the example LCE controller 102 and/or the training controller 104 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine-readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine-readable instructions may be fragmented and stored on one or more storage devices and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or another machine. For example, the machine-readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine-readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine readable media, as used herein, may include machine readable instructions and/or program(s) regardless of the particular format or state of the machine-readable instructions and/or program(s) when stored or otherwise at rest or in transit.

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 10 and/or 11 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 10 is a flowchart representative of machine-readable instructions 1000 which may be executed to implement the LCE controller 102 of FIGS. 1 and/or 2. The machine-readable instructions 1000 begin at block 1002 where the communication processor 202 obtains one or more learning curves for one or more candidate hyperparameter configurations of a child model to be trained. At block 1004, the Gaussian process training controller 204 trains the GPR model kernel hyperparameters based on the one or more obtained learning curves.

In the illustrated example of FIG. 10, at block 1006, the communication processor 202 transmits a truncation threshold to the training controller 104. For example, the truncation threshold specifies a number of epochs to which to trin the child model for a candidate hyperparameter configuration. At block 1008, the communication processor 202 obtains a truncated learning curve for the candidate hyperparameter configuration that is truncated at the truncation threshold. At block 1010, the EMF generator 206 fits the parameters of an EMF to the truncated learning curve. For example, the EMF is specifically tailored to the task of extrapolating learning curves for machine learning models

In the illustrated example of FIG. 10, at block 1012, the extrapolation controller 208 extrapolates the remainder of the truncated learning curve according the EMF. For example, the extrapolation controller 208 extrapolate the remainder of the truncated learning curve in accordance with equations 10 and 11. At block 1014, the extrapolation controller 208 determines whether the candidate hyperparameter configuration rendered less loss than the current best hyperparameter configuration. In response to the extrapolation controller 208 determining that the candidate hyperparameter configuration renders less loss than the current best hyperparameter configuration (block 1014: YES), the machine-readable instructions 1000 proceed to block 1016.

In the illustrated example of FIG. 10, at block 1016, the extrapolation controller 208 sets the candidate hyperparameter configuration as the current best hyperparameter configuration. For example, at block 1016, the extrapolation controller 208 sets the candidate hyperparameter configuration as the current best hyperparameter configuration in response to determining that the candidate hyperparameter configuration renders less loss than a previous best hyperparameter configuration. At block 1018, the extrapolation controller 208 instructs the training controller 104 to determine actual data for the remainder of the truncated learning curve generated for the candidate hyperparameter configuration. Returning to block 1014, in response to the extrapolation controller 208 determining that the candidate hyperparameter configuration renders more loss than the current best hyperparameter configuration (block 1014: NO), the machine-readable instructions 1000 proceed to block 1020.

In the illustrated example of FIG. 10, at block 1020, the extrapolation controller 208 instructs the training controller to disregard the truncated learning curve for the candidate hyperparameter configuration. At block 1022, the communication processor 202 determines whether there are additional hyperparameter configurations for the child model. For example, the communication processor 202 determines whether there are additional hyperparameter configurations based on whether a new candidate hyperparameter configuration has been received from the optimization controller 110.

In the illustrated example of FIG. 10, in response to the communication processor 202 determining that there are additional hyperparameter configurations for the child model (block 1022: YES), the machine-readable instructions 1000 return to block 1008. In response to the communication processor 202 determining that there are not additional hyperparameter configurations for the child model (block 1022: NO), the machine-readable instructions 1000 terminate.

FIG. 11 is a flowchart representative of machine-readable instructions 1100 which may be executed to implement the training controller 104 of FIGS. 1 and/or 3. The machine-readable instructions 1100 begin at block 1102 where the communication processor 302 obtains one or more candidate hyperparameter configurations for a child model. For example, the communication processor 302 obtains one or more candidate hyperparameter configurations for the child model from the optimization controller 110.

In the illustrated example of FIG. 11, at block 1104, the model executor 304 executes the child model one or more epochs. At block 1106, the weight adjustment controller 306 adjusts and/or otherwise alters the weights of all layers of the child model to train the weights of the layers. At block 1108, the model executor 304 determines whether a first freeze threshold of epochs have been executed. For example, the weight adjustment controller 306 sets a freeze threshold that indicates a number of epochs for which to train the child model before freezing weights for layers of the child model. In examples disclosed herein, the weight adjustment controller 306 sets one or more predefined freeze thresholds that correspond to aggressive PWF. For example, the weight adjustment controller 306 sets freeze thresholds that freeze the weights of shallower layers earlier on in training (e.g., the "5-5-5-85" PWF technique). Alternatively, the one or more predefined freeze thresholds may correspond to another PWF technique such as that which achieves the best performance for a given use case.

Accordingly, the model executor 304 compares the number of epochs executed to the first freeze threshold. In the example of FIG. 11, the weight adjustment controller 306 determines the freeze threshold(s) based on a heuristic. However, in additional or alternative examples, the weight adjustment controller 306 determines the freeze threshold(s) based on other characteristics. In examples disclosed herein, more extreme PWF techniques (e.g., freezing the weights of shallower layers earlier in the training) resulted in most computational savings.

In the illustrated example of FIG. 11, in response to the model executor 304 determining that the first freeze threshold has been met (block 1108: YES), the machine-readable instructions 1100 proceed to block 1110. In response to the model executor 304 determining that the first freeze threshold has not been met (block 1108: NO), the machine-readable instructions 1100 return to block 1104. At block 1110, the weight adjustment controller 306 freezes the weights for the first layer of the child model. At block 1112, the model executor 304 determines whether the truncation threshold of epochs have been executed. For example, the model executor 304 compares the number of epochs executed to the truncation threshold specified by the LCE controller 102.

In the illustrated example of FIG. 11, in response to the model executor 304 determining that the truncation threshold has not been met (block 1112: NO), the machine-readable instructions 1100 proceed to block 1114. In response to the model executor 304 determining that the truncation threshold has been met (block 1112: YES), the machine-readable instructions 1100 proceed to block 1124. At block 1114, the model executor 304 executes the child model one or more epochs. At block 1116, the weight adjustment controller 306 adjusts and/or otherwise alters the weights of the remaining unfrozen layers of the child model to train the weights of the unfrozen layers. For example, at block 1116, the weight adjustment controller 306 performs backpropagation calculations for all the layers except the frozen layer(s). Accordingly, the weights for the shallower layers are learned earlier in training and do not depend on deeper layers. At block 1118, the model executor 304 determines whether the next freeze threshold of epochs have been executed.

In the illustrated example of FIG. 11, in response to the model executor 304 determining that the next freeze threshold has been met (block 1118: YES), the machine-readable instructions 1100 proceed to block 1120. In response to the model executor 304 determining that the next freeze threshold has not been met (block 1118: NO), the machine-readable instructions 1100 return to block 1114. At block 1120, the weight adjustment controller 306 freezes the weights for the next layer of the child model. At block 1122, the model executor 304 determines whether there are additional layers of the child model.

In the illustrated example of FIG. 11, in response to the model executor 304 determining that there are additional layers of the child model (block 1122: YES), the machine-readable instructions 1100 return to block 1114. In response to the model executor 304 determining that there are not additional layers of the child model (block 1122: NO), the machine-readable instructions 1100 proceed to block 1112. At block 1124, the communication processor transmits data representative of model accuracy per epoch to the LCE controller 102. In some examples, the data representative of model accuracy per epoch corresponds a truncated learning curve. In additional or alternative examples, the data representative of model accuracy per epoch corresponds to complete learning curves.

FIG. 12 is a block diagram of an example processor platform 1200 structured to execute the instructions of FIG. 10 to implement the LCE controller 102 of FIGS. 1 and/or 2 and/or the instructions of FIG. 11 to implement the training controller 104 of FIGS. 1 and/or 3. The processor platform 1200 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 1200 of the illustrated example includes a processor 1212. The processor 1212 of the illustrated example is hardware. For example, the processor 1212 can be implemented by one or more integrated circuits, logic circuits, microprocessors, GPUs, DSPs, or controllers from any desired family or manufacturer. The hardware processor 1212 may be a semiconductor based (e.g., silicon based) device. In this example, the processor 1212 implements the example communication processor 202, the example Gaussian process training controller 204, the example explicit mean function (EMF) generator 206, the example extrapolation controller 208, and/or the example datastore 210. In additional or alternative examples, the processor 1212 implements the example communication processor 302, the example model executor 304, the example weight adjustment controller 306, and/or the example datastore 308.

For example, if the processor 1212 implements the communication processor 202, the Gaussian process training controller 204, the explicit mean function (EMF) generator 206, the extrapolation controller 208, and the datastore 210, but not the communication processor 302, the model executor 304, the weight adjustment controller 306, and the datastore 308, the processor 1212 may communicate with another device, such as example processor platform 1234. In such an example, the processor platform 1234 implements the communication processor 302, the model executor 304, the weight adjustment controller 306, and/or the datastore 308 but not the communication processor 202, the Gaussian process training controller 204, the explicit mean function (EMF) generator 206, the extrapolation controller 208, and the datastore 210.

Alternatively, if the processor 1212 implements the communication processor 302, the model executor 304, the weight adjustment controller 306, and the datastore 308, but not the communication processor 202, the Gaussian process training controller 204, the explicit mean function (EMF) generator 206, the extrapolation controller 208, and the datastore 210, the processor 1212 may communicate with another device, such as the processor platform 1234. In such an example, the processor platform 1234 implements the communication processor 202, the Gaussian process training controller 204, the explicit mean function (EMF) generator 206, the extrapolation controller 208, and the datastore 210, but not the communication processor 302, the model executor 304, the weight adjustment controller 306, and the datastore 308.

The processor 1212 of the illustrated example includes a local memory 1213 (e.g., a cache). The processor 1212 of the illustrated example is in communication with a main memory including a volatile memory 1214 and a non-volatile memory 1216 via a bus 1218. The volatile memory 1214 may be implemented by Synchronous Dynamic Random-Access Memory (SDRAM), Dynamic Random-Access Memory (DRAM), RAMBUS® Dynamic Random-Access Memory (RDRAM®) and/or any other type of random-access memory device. The non-volatile memory 1216 may be implemented by flash memory and/or any other desired type of memory device. Access to the main memory 1214, 1216 is controlled by a memory controller.

The processor platform 1200 of the illustrated example also includes an interface circuit 1220. The interface circuit 1220 may be implemented by any type of interface standard, such as an Ethernet interface, a universal serial bus (USB), a Bluetooth® interface, a near field communication (NFC) interface, and/or a PCI express interface.

In the illustrated example, one or more input devices 1222 are connected to the interface circuit 1220. The input device(s) 1222 permit(s) a user to enter data and/or commands into the processor 1212. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 1224 are also connected to the interface circuit 1220 of the illustrated example. The output devices 1224 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 1220 of the illustrated example, thus, typically includes a graphics driver card, a graphics driver chip and/or a graphics driver processor.

The interface circuit 1220 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1226. The communication can be via, for example, an Ethernet connection, a digital subscriber line (DSL) connection, a telephone line connection, a coaxial cable system, a satellite system, a line-of-site wireless system, a cellular telephone system, etc.

The processor platform 1200 of the illustrated example also includes one or more mass storage devices 1228 for storing software and/or data. Examples of such mass storage devices 1228 include floppy disk drives, hard drive disks, compact disk drives, Blu-ray disk drives, redundant array of independent disks (RAID) systems, and digital versatile disk (DVD) drives.

The machine executable instructions 1232 of FIG. 12 implements the machine-readable instructions 1000 and/or the machine-readable instructions 1100 of FIG. 11 and may be stored in the mass storage device 1128, in the volatile memory 1214, in the non-volatile memory 1216, and/or on a removable non-transitory computer readable storage medium such as a CD or DVD

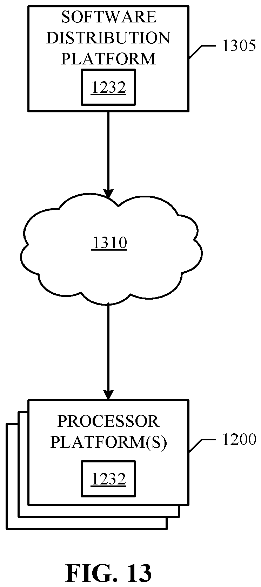

A block diagram illustrating an example software distribution platform 1305 to distribute software such as the example computer readable instructions 1232 of FIG. 12 to devices owned and/or operated by third parties is illustrated in FIG. 13. The example software distribution platform 1305 may be implemented by any computer server, data facility, cloud service, etc., capable of storing and transmitting software to other computing devices. The third parties may be customers of the entity owning and/or operating the software distribution platform 1305. For example, the entity that owns and/or operates the software distribution platform 1305 may be a developer, a seller, and/or a licensor of software such as the example computer readable instructions 1232 of FIG. 12. The third parties may be consumers, users, retailers, OEMs, etc., who purchase and/or license the software for use and/or re-sale and/or sub-licensing. For example, the entity that owns and/or operates the software distribution platform 1305 distributes software to client devices owned and/or operated by consumers for license, sale, and/or use. Additionally or alternatively, the entity that owns and/or operates the software distribution platform 1305 distributes software to client devices owned and/or operated by retailers for sale, re-sale, license, and/or sub-license. In some examples, the entity that owns and/or operates the software distribution platform 1305 distributes software to client devices owned and/or operated by OEMs for inclusion in products to be distributed to, for example, retailers and/or to direct buy customers.

In the illustrated example of FIG. 13, the software distribution platform 1305 includes one or more servers and one or more storage devices. The storage devices store the computer readable instructions 1232, which may correspond to the example computer readable instructions 1000 of FIG. 10 and/or the computer readable instructions 1100 of FIG. 11, as described above. The one or more servers of the example software distribution platform 1305 are in communication with a network 1310, which may correspond to any one or more of the Internet and/or the example network 106 described above. In some examples, the one or more servers are responsive to requests to transmit the software to a requesting party as part of a commercial transaction. Payment for the delivery, sale and/or license of the software may be handled by the one or more servers of the software distribution platform and/or via a third party payment entity. The servers enable purchasers and/or licensors to download the computer readable instructions 1232 from the software distribution platform 1305. For example, the software, which may correspond to the example computer readable instructions 1232 of FIG. 12, may be downloaded to the example processor platform 1200 and/or the processor platform 1234, which is to execute the computer readable instructions 1232 to implement the LCE controller 102 and/or the training controller 104. In some example, one or more servers of the software distribution platform 1305 periodically offer, transmit, and/or force updates to the software (e.g., the example computer readable instructions 1232 of FIG. 12) to ensure improvements, patches, updates, etc. are distributed and applied to the software at the end user devices.

From the foregoing, it will be appreciated that example methods, apparatus and articles of manufacture have been disclosed that improve automated machine learning. The disclosed methods, apparatus, and articles of manufacture include a low-compute, flexible learning curve extrapolation algorithm. For example, the disclosed semi-parametric Bayesian model extrapolates learning curves. Additionally, examples disclosed herein progressively freeze weights when training machine learning models. Examples disclosed herein train a GPR model via a segmented explicit mean function that broadly generalizes learning curve behavior, including pathological cases (e.g., overfitting).

Examples disclosed herein can be seamlessly integrated into broader NAS-HPO pipelines. For example, the disclosed examples are model-agnostic, learning algorithm-agnostic, and HP-agnostic. In this manner, examples disclosed herein can be applied to any model, for any learning algorithm, and any hyperparameter. Examples disclosed herein are fully automated and do not require any explicit, user-specified tuning. Accordingly, examples disclosed herein train GPR models on one or more learning curves without user-defined tuning. The example GPR model disclosed herein executes inference in a matter of seconds. Additionally, the example GPR model disclosed herein is trained on very little data (e.g., between 50 and 100 datapoints, between fifty and one hundred learning curves). As such, the example GPR model disclosed herein is trained on a relatively small dataset relative to other machine learning applications. Additionally, no further network training is required after the initial training.

Examples disclosed herein flexibly predict normative learning curves and pathological learning curves. The example GPR model disclosed herein additionally specifies confidence measures that can be leveraged for decisions to stop training early and/or to continue training for efficient HPO-NAS. Accordingly, examples disclosed herein reduce the computational resources expended to perform HPO-NAS processes. The disclosed methods, apparatus and articles of manufacture improve the efficiency of using a computing device by improving the efficiency of HPO by at least five times. Additionally, the low-supervision PWF techniques disclosed herein further improve the efficiency of HPO-NAS processes by four times. The disclosed methods, apparatus and articles of manufacture are accordingly directed to one or more improvement(s) in the functioning of a computer.

Example methods, apparatus, systems, and articles of manufacture to improve automated machine learning are disclosed herein. Further examples and combinations thereof include the following:

Example 1 includes an apparatus to improve automated machine learning, the apparatus comprising a communication processor to obtain, from a training controller, a truncated learning curve for a candidate hyperparameter configuration, an explicit mean function (EMF) generator to fit parameters of an EMF to the truncated learning curve, the EMF tailored to extrapolating learning curves for machine learning models, and an extrapolation controller to extrapolate remaining datapoints of the truncated learning curve according to the EMF to generate an extrapolated learning curve for the candidate hyperparameter configuration.

Example 2 includes the apparatus of example 1, wherein the extrapolation controller is to set the candidate hyperparameter configuration as a current best hyperparameter configuration in response to determining that the candidate hyperparameter configuration renders less loss than a previous best hyperparameter configuration.

Example 3 includes the apparatus of example 1, wherein the extrapolation controller is to instruct the training controller to generate actual data for the remaining datapoints of the truncated learning curve to generate a complete learning curve.

Example 4 includes the apparatus of example 1, wherein the extrapolation controller is to execute a Gaussian process regression (GPR) model to extrapolate the remaining datapoints, the GPR model trained on one or more learning curves.

Example 5 includes the apparatus of example 4, wherein the one or more learning curves include between fifty and one hundred learning curves.

Example 6 includes the apparatus of example 1 wherein the extrapolation controller is to extrapolate the remaining datapoints of the truncated learning curve for normative learning curve and pathological learning curves.

Example 7 includes the apparatus of example 1, wherein the training controller is to generate the truncated learning curve using progressive weight freezing.

Example 8 includes a non-transitory computer-readable medium comprising instructions which, when executed, cause at least one processor to at least obtain, from a training controller, a truncated learning curve for a candidate hyperparameter configuration, fit parameters of an explicit mean function (EMF) to the truncated learning curve, the EMF tailored to extrapolating learning curves for machine learning models, and extrapolate remaining datapoints of the truncated learning curve according to the EMF to generate an extrapolated learning curve for the candidate hyperparameter configuration.

Example 9 includes the non-transitory computer-readable medium of example 8, wherein the instructions, when executed, cause the at least one processor to set the candidate hyperparameter configuration as a current best hyperparameter configuration in response to determining that the candidate hyperparameter configuration renders less loss than a previous best hyperparameter configuration.

Example 10 includes the non-transitory computer-readable medium of example 8, wherein the instructions, when executed, cause the at least one processor to instruct the training controller to generate actual data for the remaining datapoints of the truncated learning curve to generate a complete learning curve.

Example 11 includes the non-transitory computer-readable medium of example 8, wherein the instructions, when executed, cause the at least one processor to execute a Gaussian process regression (GPR) model to extrapolate the remaining datapoints, the GPR model trained on one or more learning curves.

Example 12 includes the non-transitory computer-readable medium of example 11, wherein the one or more learning curves include between fifty and one hundred learning curves.

Example 13 includes the non-transitory computer-readable medium of example 8, wherein the instructions, when executed, cause the at least one processor to extrapolate the remaining datapoints of the truncated learning curve for normative learning curve and pathological learning curves.

Example 14 includes the non-transitory computer-readable medium of example 8, wherein the truncated learning curves are to be generated using progressive weight freezing.

Example 15 includes an apparatus to improve automated machine learning, the apparatus comprising memory, and at least one processor to execute machine readable instructions to cause the at least one processor to obtain, from a training controller, a truncated learning curve for a candidate hyperparameter configuration, fit parameters of an explicit mean function (EMF) to the truncated learning curve, the EMF tailored to extrapolating learning curves for machine learning models, and extrapolate remaining datapoints of the truncated learning curve according to the EMF to generate an extrapolated learning curve for the candidate hyperparameter configuration.

Example 16 includes the apparatus of example 15, wherein the at least one processor is to set the candidate hyperparameter configuration as a current best hyperparameter configuration in response to determining that the candidate hyperparameter configuration renders less loss than a previous best hyperparameter configuration.

Example 17 includes the apparatus of example 15, wherein the at least one processor is to instruct the training controller to generate actual data for the remaining datapoints of the truncated learning curve to generate a complete learning curve.

Example 18 includes the apparatus of example 15, wherein the at least one processor is to execute a Gaussian process regression (GPR) model to extrapolate the remaining datapoints, the GPR model trained on one or more learning curves.

Example 19 includes the apparatus of example 18, wherein the one or more learning curves include between fifty and one hundred learning curves.

Example 20 includes the apparatus of example 15, wherein the at least one processor is to extrapolate the remaining datapoints of the truncated learning curve for normative learning curve and pathological learning curves.

Example 21 includes the apparatus of example 15, wherein the truncated learning curves are to be generated using progressive weight freezing.

Example 22 includes a method to improve automated machine learning, the method comprising obtaining, from a training controller, a truncated learning curve for a candidate hyperparameter configuration, fitting parameters of an explicit mean function (EMF) to the truncated learning curve, the EMF tailored to extrapolating learning curves for machine learning models, and extrapolating remaining datapoints of the truncated learning curve according to the EMF to generate an extrapolated learning curve for the candidate hyperparameter configuration.

Example 23 includes the method of example 22, further including setting the candidate hyperparameter configuration as a current best hyperparameter configuration in response to determining that the candidate hyperparameter configuration renders less loss than a previous best hyperparameter configuration.

Example 24 includes the method of example 22, further including instructing the training controller to generate actual data for the remaining datapoints of the truncated learning curve to generate a complete learning curve.

Example 25 includes the method of example 22, further including executing a Gaussian process regression (GPR) model to extrapolate the remaining datapoints, the GPR model trained on one or more learning curves.

Example 26 includes the method of example 25, wherein the one or more learning curves include between fifty and one hundred learning curves.

Example 27 includes the method of example 22, further including extrapolating the remaining datapoints of the truncated learning curve for normative learning curve and pathological learning curves.

Example 28 includes the method of example 22, wherein the truncated learning curves are to be generated using progressive weight freezing.

Example 29 includes an apparatus to improve automated machine learning, the apparatus comprising means for processing communications to obtain, from means for training machine learning models, a truncated learning curve for a candidate hyperparameter configuration, means for fitting explicit mean functions (EMFs) to fit parameters of an EMF to the truncated learning curve, the EMF tailored to extrapolating learning curves for machine learning models, and means for extrapolating to extrapolate remaining datapoints of the truncated learning curve according to the EMF to generate an extrapolated learning curve for the candidate hyperparameter configuration.

Example 30 includes the apparatus of example 29, wherein the means for extrapolating is to set the candidate hyperparameter configuration as a current best hyperparameter configuration in response to determining that the candidate hyperparameter configuration renders less loss than a previous best hyperparameter configuration.

Example 31 includes the apparatus of example 29, wherein the means for extrapolating is to instruct the means for training machine learning models to generate actual data for the remaining datapoints of the truncated learning curve to generate a complete learning curve.

Example 32 includes the apparatus of example 29, wherein the means for extrapolating is to execute a Gaussian process regression (GPR) model to extrapolate the remaining datapoints, the GPR model trained on one or more learning curves.

Example 33 includes the apparatus of example 32, wherein the one or more learning curves include between fifty and one hundred learning curves.

Example 34 includes the apparatus of example 29 wherein the means for extrapolating is to extrapolate the remaining datapoints of the truncated learning curve for normative learning curve and pathological learning curves.

Example 35 includes the apparatus of example 29, wherein the means for training machine learning models is to generate the truncated learning curve using progressive weight freezing.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

**Claims**

1. A method to improve automated machine learning, the method comprising:

   obtaining, from a training controller, a truncated learning curve for a candidate hyperparameter configuration;
   fitting parameters of an explicit mean function (EMF) to the truncated learning curve, the EMF tailored to extrapolating learning curves for machine learning models; and
   extrapolating remaining datapoints of the truncated learning curve according to the EMF to generate an extrapolated learning curve for the candidate hyperparameter configuration.

2. The method of claim 1, further including setting the candidate hyperparameter configuration as a current best hyperparameter configuration in response to determining that the candidate hyperparameter configuration renders less loss than a previous best hyperparameter configuration.

3. The method of any one of claims 1 or 2, further including instructing the training controller to generate actual data for the remaining datapoints of the truncated learning curve to generate a complete learning curve.

4. The method of any one of claims 1, 2, or 3 further including executing a Gaussian process regression (GPR) model to extrapolate the remaining datapoints, the GPR model trained on one or more learning curves.

5. The method of any one of claims 1, 2, 3, or 4, wherein the one or more learning curves include between fifty and one hundred learning curves.

6. The method of any one of claims 1, 2, 3, 4, or 5, further including extrapolating the remaining datapoints of the truncated learning curve for normative learning curve and pathological learning curves.

7. The method of any one of claims 1, 2, 3, 4, 5, or 6, wherein the truncated learning curves are to be generated using progressive weight freezing.

8. An apparatus to improve automated machine learning, the apparatus comprising:

   means for processing communications to obtain, from means for training machine learning models, a truncated learning curve for a candidate hyperparameter configuration;
   means for fitting explicit mean functions (EMFs) to fit parameters of an EMF to the truncated learning curve, the EMF tailored to extrapolating learning curves for machine learning models; and
   means for extrapolating to extrapolate remaining datapoints of the truncated learning curve according to the EMF to generate an extrapolated learning curve for the candidate hyperparameter configuration.

9. The apparatus of claim 8, wherein the means for extrapolating is to set the candidate hyperparameter configuration as a current best hyperparameter configuration in response to determining that the candidate hyperparameter configuration renders less loss than a previous best hyperparameter configuration.

10. The apparatus of any one of claims 8 or 9, wherein the means for extrapolating is to instruct the means for training machine learning models to generate actual data for the remaining datapoints of the truncated learning curve to generate a complete learning curve.

11. The apparatus of any one of claims 8, 9, or 10, wherein the means for extrapolating is to execute a Gaussian process regression (GPR) model to extrapolate the remaining datapoints, the GPR model trained on one or more learning curves.

12. The apparatus of any one of claims 8, 9, 10, or 11, wherein the one or more learning curves include between fifty and one hundred learning curves.

**13.** The apparatus of any one of claims 8, 9, 10, 11, or 12, wherein the means for extrapolating is to extrapolate the remaining datapoints of the truncated learning curve for normative learning curve and pathological learning curves.

**14.** The apparatus of any one of claims 8, 9, 10, 11, 12, or 13, wherein the means for training machine learning models is to generate the truncated learning curve using progressive weight freezing.

**15.** A computer-readable medium comprising instructions which, when executed, cause at least one processor to at least implement a method or realize an apparatus as claimed in any preceding claim.

100

108

OPTIMIZATION
CONTROLLER

110

NETWORK

106

TRAINING
CONTROLLER

104

LEARNING CURVE
EXTRAPOLATION
CONTROLLER

102

**FIG. 1**

LEARNING CURVE EXTRAPOLATION CONTROLLER 102

| COMMUNICATION PROCESSOR | EXTRAPOLATION CONTROLLER |

TO/FROM 106

202

208

GAUSSIAN PROCESS TRAINING CONTROLLER

DATASTORE

204

212

210

EXPLICIT MEAN FUNCTION GENERATOR

206

**FIG. 2**

TRAINING CONTROLLER 104

TO/FROM 106

COMMUNICATION PROCESSOR

WEIGHT ADJUSTMENT CONTROLLER

302

310

306

MODEL EXECUTOR

DATASTORE

304

308

**FIG. 3**

FIG. 4

**FIG. 5**

**FIG. 6**

700

**FIG. 7**

800

**FIG. 8**

FIG. 9

1000

START

1002

OBTAIN LEARNING CURVE(S) FOR ONE OR MORE
CANDIDATE HYPERPARAMETER CONFIGURATIONS OF A
CHILD MODEL TO BE OPTIMIZED

1004

TRAIN GAUSSIAN PROCESS REGRESSION MODEL KERNEL
HYPERPARAMETERS BASED ON THE LEARNING CURVE(S)

1006

TRANSMIT TRUNCATION THRESHOLD NUMBER OF EPOCHS
TO WHICH TO TRAIN THE CHILD MODEL WITH A
CANDIDATE HYPERPARAMETER CONFIGURATION

1008

OBTAIN TRUNCATED LEARNING CURVE FOR THE
CANDIDATE HYPERPARAMETER CONFIGURATION
TRUNCATED AT THE TRUNCATION THRESHOLD

1010

FIT PARAMETERS OF AN EXPLICIT MEAN FUNCTION (EMF)
TO THE TRUNCATED LEARNING CURVE

1012

EXTRAPOLATE REMAINDER OF THE TRUNCATED
LEARNING CURVE ACCORDING TO THE EMF

1014

CANDIDATE HYPERPARAMETER CONFIGURATION
RENDERS LESS LOSS THAN THE CURRENT BEST
HYPERPARAMETER CONFIGURATION?

NO

1016

YES

SET CANDIDATE HYPERPARAMETER CONFIGURATION AS
THE CURRENT BEST HYPERPARAMETER CONFIGURATION

1018

INSTRUCT TRAINING CONTROLLER TO GENERATE ACTUAL
DATA FOR THE REMAINDER OF THE LEARNING CURVE

1020

INSTRUCT TRAINING
CONTROLLER TO DISREGARD
TRUNCATED LEARNING CURVE
FOR CANDIDATE HYPER
PARAMETER CONFIGURATION

1022

ADDITIONAL HYPERPARAMETER CONFIGURATION
FOR CHILD MODEL?

YES

NO

END

**FIG. 10**

1100

START

1102 OBTAIN CANDIDATE HYPERPARAMETER CONFIGURATION(S) FOR A CHILD MODEL FROM THE OPTIMIZATION CONTROLLER

1104 EXECUTE CHILD MODEL FOR ONE OR MORE EPOCH(S)

1106 TRAIN WEIGHTS FOR ALL LAYERS OF CHILD MODEL

1108 FIRST FREEZE THRESHOLD OF EPOCHS EXECUTED? — NO

YES

1110 FREEZE WEIGHTS FOR FIRST LAYER OF CHILD MODEL

1112 TRUNCATION THRESHOLD OF EPOCHS EXECUTED? — YES

NO

1114 EXECUTE CHILD MODEL FOR ONE OR MORE EPOCH(S)

1116 TRAIN WEIGHTS FOR REMAINING LAYERS OF CHILD MODEL

1118 NEXT FREEZE THRESHOLD OF EPOCHS EXECUTED? — NO

YES

1120 FREEZE WEIGHTS FOR NEXT LAYER OF CHILD MODEL

1122 ADDITIONAL LAYERS OF CHILD MODEL? — YES

NO

1124 TRANSMIT MODEL ACCURACY PER EPOCH TO LCE CONTROLLER

END

**FIG. 11**

1200

1214

1228

VOLATILE MEMORY

MASS STORAGE

1232

CODED INSTRUCTIONS

1232

1218

1222

INPUT DEVICE(S)

1216

NON-VOLATILE MEMORY

1232

1220

INTERFACE

1226

NETWORK

1212

PROCESSOR

1224

OUTPUT DEVICE(S)

LOCAL MEMORY 1213

COMMUNICATION PROCESSOR 202

COMMUNICATION PROCESSOR 302

1232

COMMUNICATION PROCESSOR 202

COMMUNICATION PROCESSOR 302

GAUSSIAN PROCESS TRAINING CONTROLLER 204

MODEL EXECUTOR 304

GAUSSIAN PROCESS TRAINING CONTROLLER 204

MODEL EXECUTOR 304

EXPLICIT MEAN FUNCTION GENERATOR 206

WEIGHT ADJUSTMENT CONTROLLER 306

EXPLICIT MEAN FUNCTION GENERATOR 206

WEIGHT ADJUSTMENT CONTROLLER 306

EXTRAPOLATION CONTROLLER 208

DATASTORE 308

EXTRAPOLATION CONTROLLER 208

DATASTORE 308

DATASTORE 210

DATASTORE 210

1234

FIG. 12

SOFTWARE
DISTRIBUTION
PLATFORM — 1305

1232

1310

PROCESSOR
PLATFORM(S) — 1200

1232

**FIG. 13**

Europäisches
Patentamt

European
Patent Office

Office européen
des brevets

# EUROPEAN SEARCH REPORT

**Application Number**

**EP 21 19 6492**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Feurer Matthias ET AL: "Hyperparameter Optimization : Methods, Systems, Challenges" In: "Gesture Recognition", 1 January 2019 (2019-01-01), Springer International Publishing, Cham, XP055801204, ISSN: 2520-131X ISBN: 978-3-319-57021-1 pages 3-33, DOI: 10.1007/978-3-030-05318-5_1, Retrieved from the Internet: URL:https://www.automl.org/wp-content/uploads/2019/05/AutoML_Book_Chapter1.pdf> * abstract * * chapters 1.1-1.6; page 3 - page 21; figures 1.1-1.3 * ----- | 1-15 | INV. G06N3/08 G06N3/04 G06F17/18 |
| X | PETER I FRAZIER: "A Tutorial on Bayesian Optimization", ARXIV.ORG, CORNELL UNIVERSITY LIBRARY, 201 OLIN LIBRARY CORNELL UNIVERSITY ITHACA, NY 14853, 8 July 2018 (2018-07-08), XP081112173, * abstract * * chapters 1-3; page 1 - page 6; figures 1, 2 * * chapter 5; page 12 - page 15 * ----- | 1-15 | |

TECHNICAL FIELDS
SEARCHED    (IPC)

G06N

-/--

The present search report has been drawn up for all claims

| Place of search | Date of completion of the search | Examiner |
|---|---|---|
| The Hague | 10 March 2022 | Hasnas, Sergiu |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**page 1 of 2**

**EUROPEAN SEARCH REPORT**

Application Number

EP 21 19 6492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HEKER MICHAL ET AL: "Hierarchical Fine-Tuning for joint Liver Lesion Segmentation and Lesion Classification in CT", 2019 41ST ANNUAL INTERNATIONAL CONFERENCE OF THE IEEE ENGINEERING IN MEDICINE AND BIOLOGY SOCIETY (EMBC), IEEE, 23 July 2019 (2019-07-23), pages 895-898, XP033625033, DOI: 10.1109/EMBC.2019.8857127 [retrieved on 2019-10-02] * abstract * * chapter IV; page 897 - page 898; figures 2, 3 * ----- | 7,14 | |

TECHNICAL FIELDS SEARCHED (IPC)

The present search report has been drawn up for all claims

| Place of search | Date of completion of the search | Examiner |
|---|---|---|
| The Hague | 10 March 2022 | Hasnas, Sergiu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................
& : member of the same patent family, corresponding
    document

EPO FORM 1503 03.82 (P04C01)